# EUROPEAN PATENT APPLICATION

(11) **EP 4 492 147 A1**
(43) Date of publication of application: **15.01.2025**
(21) Application number: 24179774.5
(22) Date of filing: 04.06.2024
(51) Int. Cl.: G03G 5/05, G03G 5/147, G03G 9/097

(54) **ELECTROPHOTOGRAPHIC APPARATUS**

(30) Priority: 05.06.2023 JP 2023092612
(71) Applicant: CANON KABUSHIKI KAISHA, Tokyo 146-8501 (JP)
(72) Inventor: NAKAMURA, Nobuhiro, Tokyo, 146-8501 (JP); HIYAMA, Fumiyuki, Tokyo, 146-8501 (JP); NISHIDA, Tsutomu, Tokyo, 146-8501 (JP); WATANABE, Shuntaro, Tokyo, 146-8501 (JP)
(74) Representative: TBK

(57) **Abstract**

An image-forming apparatus with strontium titanate used as an external additive for a toner is provided, wherein the image-forming apparatus is an electrophotographic apparatus that has the durability of an electrophotographic photosensitive member maintained and is superior in transferability even under low-temperature/low-humidity conditions. An electrophotographic apparatus is provided, the electrophotographic apparatus including: an electrophotographic photosensitive member having a surface layer containing a resin X as a binder resin; a charging unit; an exposing unit; a developing unit; and a transferring unit, wherein the toner contains strontium titanate as an external additive, and the resin X contains a structural unit represented by Formula (1).

## Description

### BACKGROUND OF THE INVENTION

### Field of the Invention

The present invention relates to an electrophotographic apparatus with an electrophotographic photosensitive member.

### Description of the Related Art

Organic electrophotographic photosensitive members containing an organic photoconductive material (charge generation material) (hereinafter, also referred to as "electrophotographic photosensitive member" or "photosensitive member", simply) are used as electrophotographic photosensitive members to be installed in electrophotographic apparatuses and process cartridges. Longer-lived electrophotographic apparatuses have been needed in recent years, and hence providing an electrophotographic photosensitive member with enhanced image quality and wear resistance (mechanical durability) has been demanded.

In addition to the approach to longer life as mentioned above, recent electrophotographic apparatuses have been required to achieve enhanced image quality and reduction in the amounts of waste toners by increasing the efficiency of the transferring process to prevent toners from splashing in transfer.

Polycarbonate resins have been conventionally used as a binder resin for charge transport layers of electrophotographic photosensitive members. Strontium titanate has been used as an external additive for toners for development of electrostatic charge images in order to control the chargeability of toners. Japanese Patent Application Laid-Open No. 2021-131520 proposes an electrophotographic apparatus, wherein a polycarbonate resin is used as a binder resin for a charge transport layer of a photosensitive member and a toner with strontium titanate as an external additive is used.

Enhancing the durability of an electrophotographic photosensitive member by using a polyarylate resin, which has higher mechanical strength than polycarbonate resins, as a binder resin for a charge transport layer has been proposed. The polyarylate resin is one of polyester resins with aromatic dicarboxylic acid. Japanese Patent Application Laid-Open No. 2011-227486 proposes a photosensitive member with the durability and electric characteristics enhanced by inclusion of a polyarylate resin in a photosensitive layer.

Examination carried out by the present inventors has concluded that an image-forming apparatus such that the polycarbonate resin of the electrophotographic photosensitive member described in Japanese Patent Application Laid-Open No. 2021-131520 is replaced with the polyarylate resin described in Japanese Patent Application Laid-Open No. 2011-227486 in order to impart enhanced durability to the photosensitive member has room for improvement in transferability under a low-temperature/low-humidity environment after endurance.

Accordingly, an object of the present invention is to provide an image-forming apparatus with strontium titanate used as an external additive for a toner, wherein the image-forming apparatus is an electrophotographic apparatus that has the durability of an electrophotographic photosensitive member maintained and is superior in transferability even under low-temperature/low-humidity conditions.

### SUMMARY OF THE INVENTION

The object is achieved by the present invention shown below. Specifically, the electrophotographic apparatus according to the present invention is characterized by including:
an electrophotographic photosensitive member having a surface layer containing a resin X as a binder resin;
a charging unit that charges a surface of the electrophotographic photosensitive member with electricity;
an exposing unit that irradiates the charged surface of the electrophotographic photosensitive member with light to form an electrostatic latent image;
a developing unit that feeds a toner to the electrostatic latent image to form a toner image; and
a transferring unit that transfers the toner image onto a transfer medium, wherein
the toner contains strontium titanate as an external additive, and
the resin X contains a structural unit represented by Formula (1):

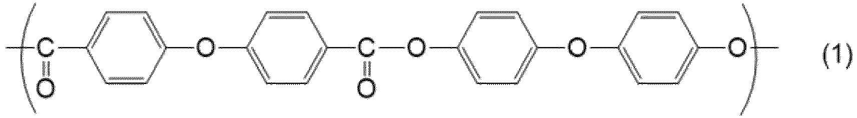

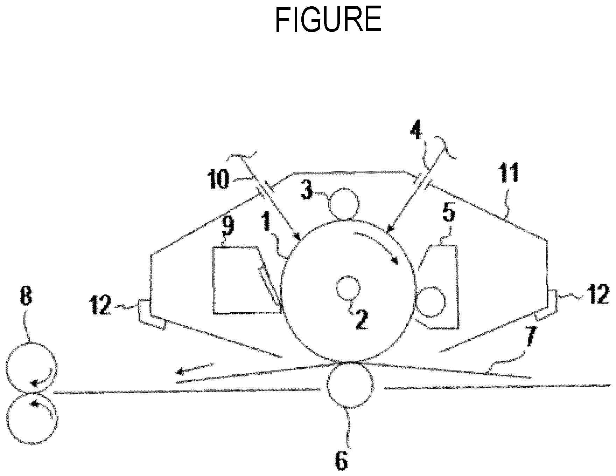

Further features of the present invention will become apparent from the following description of exemplary embodiments with reference to the attached drawing.

### BRIEF DESCRIPTION OF THE DRAWINGS

FIGURE is a diagram illustrating an example of a schematic configuration of an electrophotographic apparatus including a process cartridge with the electrophotographic photosensitive member according to the present invention.

### DESCRIPTION OF THE EMBODIMENTS

Preferred embodiments of the present invention will now be described in detail in accordance with the accompanying drawing.

Hereinafter, the present invention will be described in detail with reference to preferred embodiments.

The image-forming apparatus described in Japanese Patent Application Laid-Open No. 2021-131520, including an electrophotographic photosensitive member containing a polycarbonate resin and a toner with strontium titanate externally added thereto, does not undergo the deterioration of the transferability. However, a combined image-forming apparatus such that the electrophotographic photosensitive member containing a polycarbonate resin is changed to one containing a polyarylate resin in order to achieve enhanced durability undergoes the deterioration of the transferability under low-temperature/low-humidity conditions. From this, the present inventors infer the reason why the electrophotographic photosensitive member containing a polyarylate resin causes deteriorated transferability as follows.

In charging a surface of a photosensitive member with electricity, discharge is generated from a charging member to the photosensitive member. The energy of discharge causes the discharge deterioration of a material contained in the surface of the photosensitive member; specifically, bonds in the binder resin in the surface of the photosensitive member may be broken. The polyarylate resin is likely to undergo the generation of COOH groups through cleavage of ester bond parts by discharge. In particular, under low-temperature/low-humidity conditions, instability of discharge results in occasional occurrence of strong discharge, and significant discharge deterioration is likely to occur. Accordingly, numerous COOH groups tend to be generated in the surface of the photosensitive member through repeated uses during long-term use. Strontium titanate has a perovskite-type crystal structure, and the metal titanium and functional groups or the like readily interact with each other. In particular, COOH exhibits strong interaction through coordinate bonding of unshared electron pairs to an orbital of the metal titanium. Hence, strong adhesion force is expected to be generated between the toner with strontium titanate externally added thereto and the photosensitive member containing a polyarylate resin through repeated uses, leading to the occurrence of the deterioration of the transferability. Polycarbonate is less likely to undergo the generation of COOH groups and has lower mechanical strength than polyarylate, allowing COOH groups to be easily removed by sliding on a surface of the photosensitive member. This is inferred to account for the reason why the conventional combination of strontium titanate and polycarbonate does not cause the deterioration of the transferability, and the combination of strontium titanate and polyarylate causes the deterioration of the transferability.

Based on the inference, examination has been carried out in various ways for an approach that involves use of strontium titanate as an external additive for a toner to achieve enhanced durability in an electrophotographic photosensitive member without causing the deterioration of transferability, and has led to the configuration of the present invention.

The polyarylate resin has a structure in which a structure derived from dicarboxylic acid containing an aromatic ring and a diol containing aromatic rings (bisphenol) are bonded together. The present inventors have found that if such a resin has an ether structure as a linkage between aromatic rings, the resin is resistant to discharge deterioration. Furthermore, the resin X, which has, as the structure represented by Formula (1), an ether structure between aromatic rings in a structure derived from dicarboxylic acid simultaneously with an ether structure between aromatic rings in a structure derived from bisphenol, is particularly resistant to discharge deterioration, and less likely to undergo the generation of COOH groups. This is inferred to prevent an increase in adhesion force to the toner with strontium titanate externally added thereto, and result in enhanced transferability even in endurance under low-temperature/low-humidity conditions.

### [Electrophotographic Photosensitive Member]

The electrophotographic photosensitive member of the present invention at least includes: a support; and a photosensitive layer formed on the support.

Examples of methods for producing the electrophotographic photosensitive member of the present invention include a method in which coating solutions for layers described later are prepared, applied in a desired order of layers, and dried. Examples of methods available for the application of a coating solution include dip coating, spray coating, inkjet coating, roll coating, die coating, blade coating, curtain coating, wire bar coating and ring coating. Among them, dip coating is preferred for efficiency and productivity.

The layers will be described in the following.

### <Support>

In the present invention, the electrophotographic photosensitive member includes a support. In the present invention, the support is preferably a conductive support, which has conductivity. Examples of the shape of the support include cylindrical, belt-like and sheet-like shapes. The support preferably has a cylindrical shape among them. The surface of the support may be subjected to electrochemical treatment such as anodic oxidation, blasting, cutting and so on.

Preferably, the material of the support is, for example, metal, resin, or glass.

Examples of the metal include aluminum, iron, nickel, copper, gold, stainless steel and alloys of any of them. The support is preferably an aluminum support with aluminum among them.

Conductivity may be imparted to the resin or glass by treating, for example, by mixing or coating with a conductive material.

### <Conductive Layer>

In the present invention, a conductive layer may be provided on the support. The conductive layer provided can mask the unevenness and defects of the support and prevent the generation of interference fringes. The average thickness of the conductive layer is preferably 5 µm or more and 40 µm or less.

The conductive layer preferably contains a conductive particle and a binder resin. Examples of the conductive particle include carbon black, a metal particle and a metal oxide particle. Examples of the metal oxide include zinc oxide, aluminum oxide, indium oxide, silicon oxide, zirconium oxide, tin oxide, titanium oxide, magnesium oxide, antimony oxide and bismuth oxide. Examples of the metal include aluminum, nickel, iron, nichrome, copper, zinc and silver.

Among them, a metal oxide is preferably used for the conductive particle; in particular, titanium oxide, tin oxide or zinc oxide is more preferably used.

In the case that a metal oxide is used for the conductive particle, the surface of the metal oxide may be treated with a silane coupling agent or the like, and the metal oxide may be doped with phosphorous, aluminum or like element or an oxide thereof. Examples of elements and oxides thereof for doping include phosphorous, aluminum, niobium and tantalum.

The conductive particle may have a laminate configuration including a core particle and a coating layer coating the particle. Examples of the core particle include titanium oxide, barium sulfate and zinc oxide. Examples of the coating layer include metal oxides such as tin oxide and titanium oxide.

In the case that a metal oxide is used for the conductive particle, the volume-average particle size is preferably 1 nm or more and 500 nm or less.

Examples of the resin include polyester resin, polycarbonate resin, polyvinylacetal resin, acrylic resin, silicone resin, epoxy resin, melamine resin, polyurethane resin, phenolic resin and alkyd resin.

The conductive layer may further contain, for example, silicone oil, a resin particle or a masking agent such as titanium oxide.

The average thickness of the conductive layer is preferably 1 µm or more and 50 µm or less.

The conductive layer can be formed in such a manner that a coating solution for a conductive layer, the coating solution containing the above materials and a solvent, is prepared, and a coating film is formed with the coating solution, and dried. Examples of the solvent that is used for the coating solution include alcoholic solvents, sulfoxide solvents, ketone solvents, ether solvents, ester solvents and aromatic hydrocarbon solvents. Examples of dispersing methods for dispersing the conductive particle in the coating solution for a conductive layer include a method with a paint shaker, a sand mill, a ball mill or a liquid-collision high-speed disperser.

### <Undercoat Layer>

In the present invention, an undercoat layer may be provided on the support or the conductive layer. The undercoat layer provided can impart a higher interlayer adhesion function and a function to inhibit charge injection.

The undercoat layer preferably contains a resin. The undercoat layer may be formed as a cured film by polymerizing a composition containing a monomer having a polymerizable functional group.

Examples of the resin include polyester resin, polycarbonate resin, polyvinylacetal resin, acrylic resin, epoxy resin, melamine resin, polyurethane resin, phenolic resin, polyvinylphenol resin, alkyd resin, polyvinylalcohol resin, polyethylene oxide resin, polypropylene oxide resin, polyamide resin, polyamic acid resin, polyimide resin, polyamideimide resin and cellulose resin.

Examples of polymerizable functional groups possessed by the monomer having a polymerizable functional group include an isocyanate group, a blocked isocyanate group, a methylol group, an alkylated methylol group, an epoxy group, a metal alkoxide group, a hydroxyl group, an amino group, a carboxy group, a thiol group, a carboxylic anhydride group and a carbon-carbon double bond group.

The undercoat layer may further contain, for example, an electron transport material, metal oxide, metal or conductive polymer for enhanced electric characteristics. Among them, an electron transport material or metal oxide is preferably used.

Examples of the electron transport material include quinone compounds, imide compounds, benzimidazole compounds, cyclopentadienylidene compounds, fluorenone compounds, xanthone compounds, benzophenone compounds, cyanovinyl compounds, halogenated aryl compounds, silole compounds and fluorine-containing compounds. The undercoat layer may be formed as a cured film by copolymerizing an electron transport material having a polymerizable functional group and the above-described monomer having a polymerizable functional group.

Examples of the metal oxide include indium tin oxide, tin oxide, indium oxide, titanium oxide, zinc oxide, aluminum oxide and silicon dioxide. Examples of the metal include gold, silver and aluminum.

The undercoat layer may further contain an additive.

The average thickness of the undercoat layer is preferably 0.1 µm or more and 50 µm or less, more preferably 0.2 µm or more and 40 µm or less, and particularly preferably 0.3 µm or more and 30 µm or less.

The undercoat layer can be formed in such a manner that a coating solution for an undercoat layer, the coating solution containing the above-described materials and a solvent, is prepared, and a coating film is formed with the coating solution, and dried and/or cured. Examples of the solvent that is used for the coating solution include alcoholic solvents, ketone solvents, ether solvents, ester solvents and aromatic hydrocarbon solvents.

### <Photosensitive Layer>

Photosensitive layers of electrophotographic photosensitive members are primarily classified into (1) laminate-type photosensitive layers and (2) monolayer-type photosensitive layers. (1) A laminate-type photosensitive layer includes a charge generation layer containing a charge generation material and a charge transport layer containing a charge transport material. (2) A monolayer-type photosensitive layer includes a photosensitive layer containing both a charge generation material and a charge transport material. The electrophotographic photosensitive member according to the present invention preferably includes a laminate-type photosensitive layer.

### (1) Laminate-Type Photosensitive Layer

The laminate-type photosensitive layer includes a charge generation layer and a charge transport layer. In an embodiment of the present invention, the charge transport layer is a surface layer.

### (1-1) Charge Generation Layer

The charge generation layer preferably contains a charge generation material and a resin.

The charge generation material that is used for the charge generation layer is preferably a phthalocyanine pigment. Examples of phthalocyanine include titanyl phthalocyanine, hydroxygallium phthalocyanine and chlorogallium phthalocyanine. Among them, titanyl phthalocyanine is more preferred.

Examples of the binder resin that is used for the charge generation layer include resins (insulating resins) including polyvinylbutyral resin, polyvinylacetal resin, polyarylate resin, polycarbonate resin, polyester resin, polyvinyl acetate resin, polysulfone resin, polystyrene resin, phenoxy resin, acrylic resin, phenoxy resin, polyacrylamide resin, polyvinylpyridine resin, urethane resin, agarose resin, cellulose resin, casein resin, polyvinyl alcohol resin, polyvinylpyrrolidone resin, vinylidene chloride resin, acrylonitrile copolymer and polyvinyl benzal resin. In addition, organic photoconductive polymers such as poly-N-vinylcarbazole, polyvinylanthracene and polyvinylpyrene can be used. Only one binder resin may be used; alternatively, two or more binder resins may be used in combination as a mixture or a copolymer.

Examples of the solvent that is used for the coating solution for a charge generation layer include toluene, xylene, tetralin, chlorobenzene, dichloromethane, chloroform, trichloroethylene, tetrachloroethylene, carbon tetrachloride, methyl acetate, ethyl acetate, propyl acetate, methyl formate, ethyl formate, acetone, methyl ethyl ketone, cyclohexanone, diethyl ether, dipropyl ether, propylene glycol monomethyl ether, dioxane, methylal, tetrahydrofuran, water, methanol, ethanol, n-propanol, isopropanol, butanol, methylcellosolve, methoxypropanol, dimethylformamide, dimethylacetamide and dimethyl sulfoxide. One or two or more solvents may be used alone or as a mixture.

The charge generation layer can be provided in such a manner that a phthalocyanine pigment as a charge generation material and an optional binder resin are dispersed in a solvent to prepare a coating solution for a charge generation layer, and a coating film is formed with the coating solution for a charge generation layer, and dried.

The coating solution for a charge generation layer may be prepared by dispersing only a charge generation material in a solvent and then adding a binder resin, or by simultaneously dispersing a charge generation material and a binder resin in a solvent.

In the dispersion, dispersers including medium dispersers such as a sand mill and a ball mill, liquid-collision dispersers and ultrasonic dispersers are applicable.

### (1-2) Charge Transport Layer

In the case that the surface layer of the present invention is a charge transport layer, the charge transport layer contains a binder resin. Preferably, the charge transport layer further contains a charge transport material.

### [Binder Resin]

The binder resin that is used for the charge transport layer contains a resin X containing a structural unit represented by Formula (1):

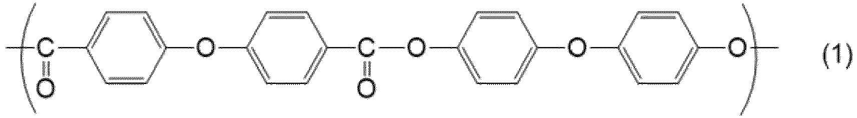

Preferably, the resin X further contains a structural unit represented by Formula (2): 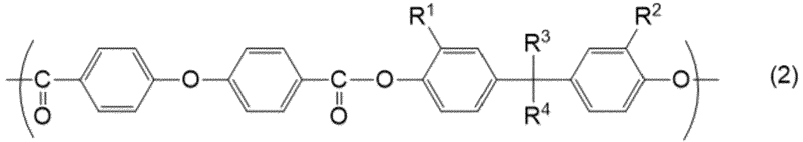 wherein R¹ and R² each represent a methyl group, and R³ and R⁴ are bonding to each other to represent a cycloalkylidene group having five or six carbon atoms; or R¹ and R² each independently represent a hydrogen atom or a methyl group, R³ represents a methyl group, and R⁴ represents a hydrogen atom or an alkyl group having two or three carbon atoms.

Inclusion of the structural units of Formula (1) and Formula (2) allows the charge transport layer to have enhanced wear resistance and enables better prevention of discharge deterioration. The reason why enhanced wear resistance and better prevention of discharge deterioration result is inferred as follows. Formula (2) includes a structure derived from dicarboxylic acid and a structure derived from bisphenol. In addition, the structure derived from dicarboxylic acid includes an ether structure, which gives wear resistance and resistance to discharge deterioration, and the structure derived from bisphenol gives a backbone bulky in one side.

The presence of molecules with asymmetricity in position and size with respect to the main chain, including those of R¹ and R², tends to allow the binder resin and the charge transport material in the charge transport layer to be prevented from localizing.

As a result of preventing the binder resin and the charge transport material in the charge transport layer from localizing, homogenous distribution is achieved, the effect of the structural units of Formula (1) and Formula (2) to prevent discharge deterioration is sufficiently exerted, and enhanced wear resistance and better prevention of discharge deterioration are achieved.

In the charge transport layer, the value of n2/n1 is preferably 1.0 or more, wherein the value is the ratio of the number of the structural unit represented by Formula (2) contained in the resin X, n2, to the number of the structural unit represented by Formula (1) contained in the resin X, n1. If the value is 10.0 or more, the effect for wear resistance and prevention of discharge deterioration is less likely to be obtained. More preferably, n2/n1 is 1.0 or more and 3.0 or less.

Preferred examples of Formula (2) include Formula (2-1), Formula (2-2), Formula (2-3), Formula (2-4) and Formula (2-5):

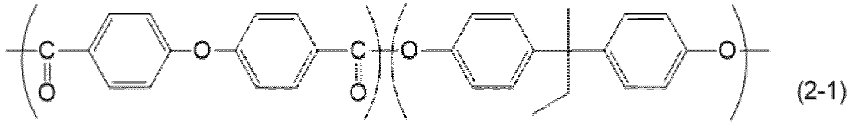

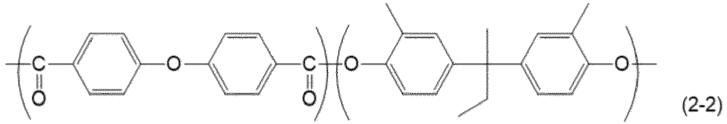

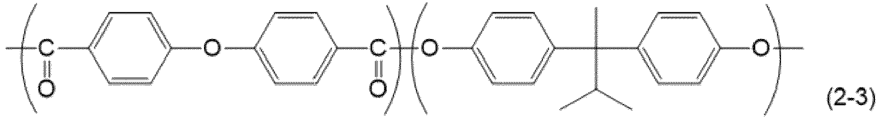

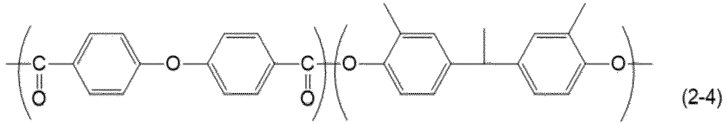

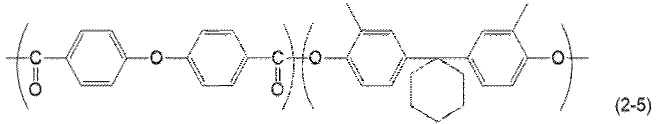

Moreover, the resin X more preferably contains Formula (2-5) among them.

The viscosity-average molecular weight of the resin X is preferably 10,000 or more, and more preferably 40,000 or more. The viscosity-average molecular weight of the resin X being 10,000 or more allows the photosensitive member to have enhanced wear resistance. On the other hand, the viscosity-average molecular weight of the resin X is preferably 80,000 or less, and more preferably 70,000 or less. The viscosity-average molecular weight of the resin X being 80,000 or less allows the resin X to readily dissolve in the solvent for forming a photosensitive layer.

More preferably, the resin X further contains a structural unit represented by Formula (PE1-1) and a structural unit represented by (PE2-1):

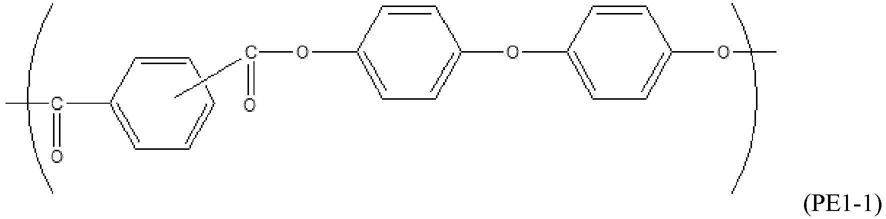

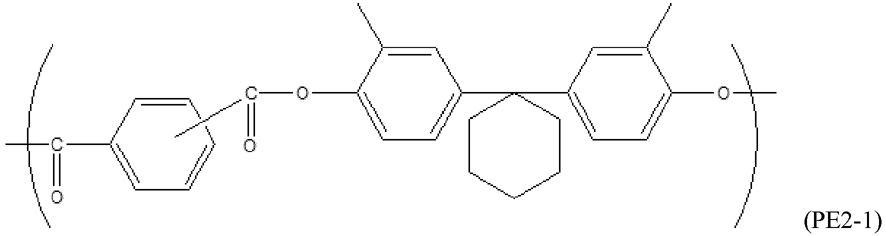

The charge transport layer may further contain a resin other than the resin X, which contains the structural unit represented by Formula (1) and the structural unit represented by Formula (2), as a binder resin. Examples of the additional resin include polyarylate resin of another type, polyester resin, polycarbonate resin, styrene resin and acrylic resin. The polyarylate resin may be, for example, a random copolymer, an alternating copolymer, a periodic copolymer or a block copolymer.

Examples of structural units in the polyarylate resin of another type include the followings:

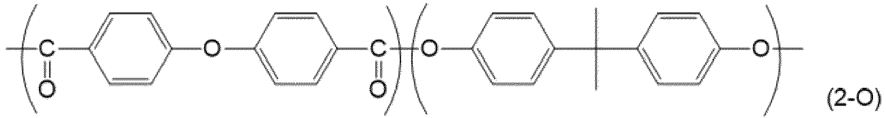

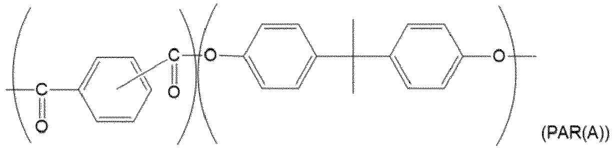

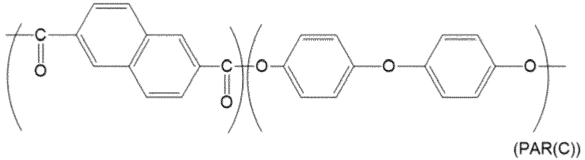

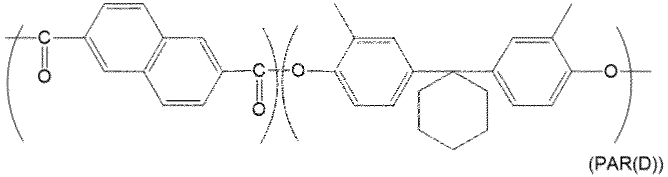

The resin X, which is used as a binder resin for the surface layer of the electrophotographic photosensitive member of the present invention and contains the structural unit represented by Formula (1), may contain another structural unit as long as the resin X contains the structural unit represented by Formula (1), and the resin X may be a copolymer with a structural unit including a group derived from divalent carboxylic acid of another type and a divalent organic residue which are differing from those of Formula (1).

The content of the resin X containing the structural unit represented by Formula (1) and the structural unit represented by Formula (2) in the binder resin in the charge transport layer is preferably 50% by mass or more and 100% by mass or less.

Production of the resin X is not limited to a particular method. An example is a method in which bisphenol to constitute the structure derived from bisphenol and dicarboxylic acid to constitute the structure derived from dicarboxylic acid are subjected to polycondensation. A known synthesis method including polycondensation can be used.

Derivatives of bisphenol and dicarboxylic acid may be used. An aromatic diacetate may be used as a derivative of bisphenol. Examples of derivatives of dicarboxylic acid include dicarboxylic acid dichloride, dicarboxylic acid dimethyl ester, dicarboxylic acid diethyl ester and dicarboxylic anhydride.

The ratio, n2/n1, can be adjusted by altering the types and amounts of bisphenol and dicarboxylic acid in producing the resin X.

The ratio, n2/n1, can be calculated through analysis by nucleic magnetic resonance analysis and pyrolysis GS-MS analysis.

### [Charge Transport Material]

Any of compounds represented by following Formula (20), Formula (21), Formula (22), Formula (23), Formula (24) and Formula (25) is preferably used for the charge transport material:

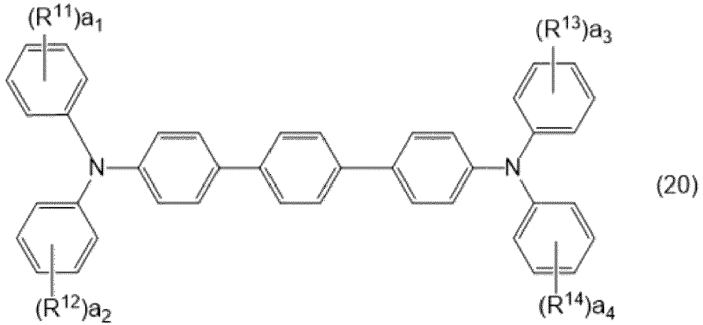

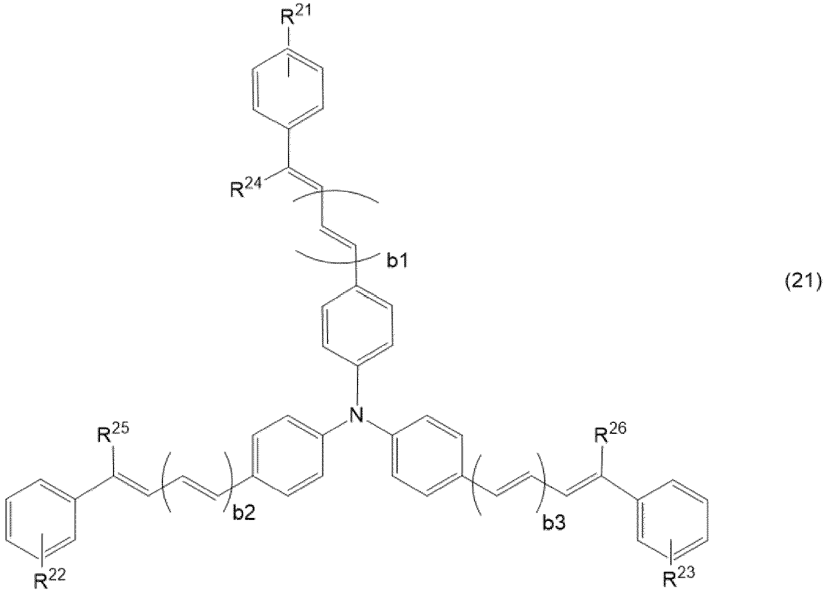

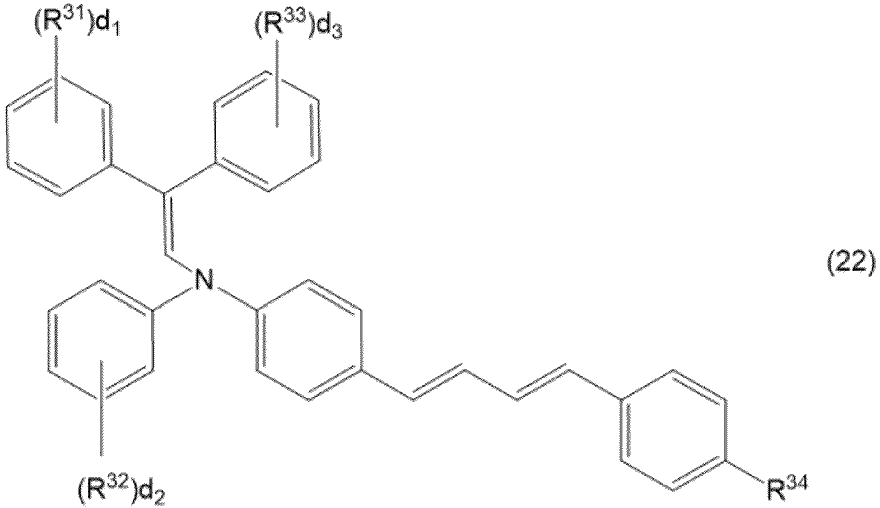

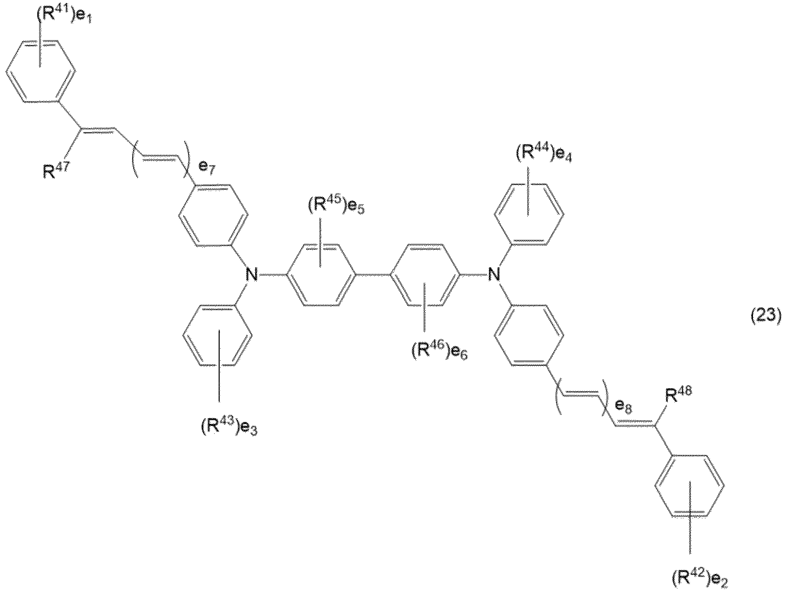

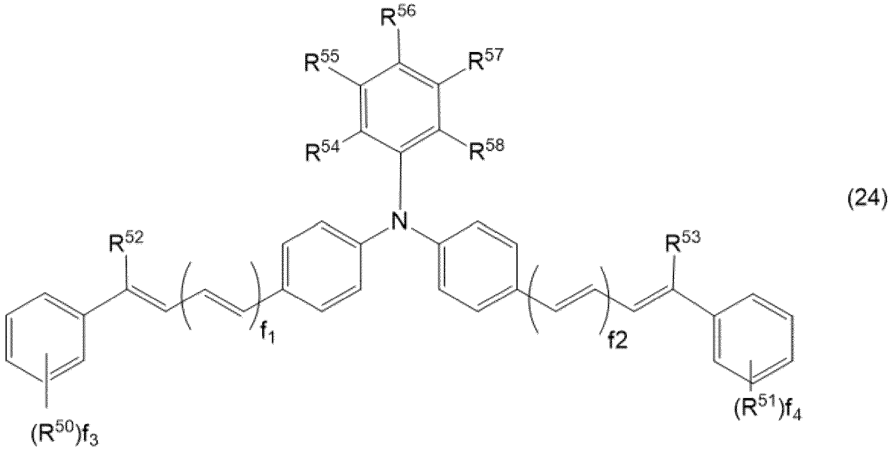

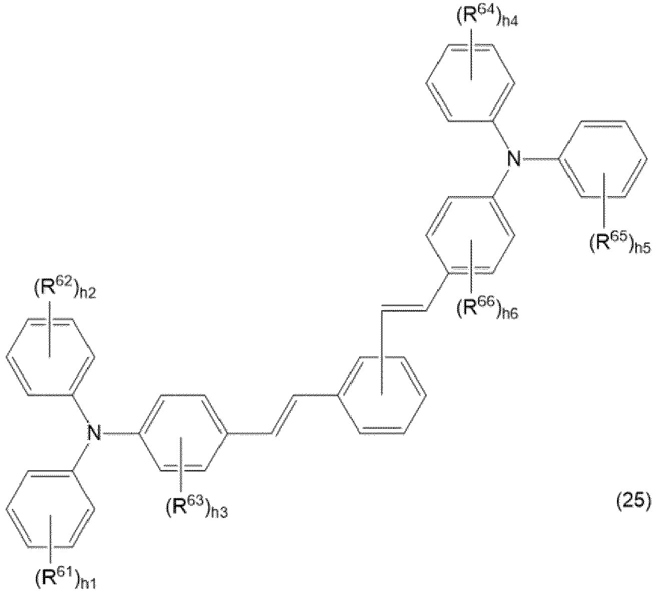

In Formula (20), R¹¹, R¹², R¹³ and R¹⁴ each independently represent an alkyl group having one or more and six or less carbon atoms, or an alkoxy group having one or more and six or less carbon atoms, a₁, a₂, a₃ and a₄ each independently represent an integer of 0 or more and 5 or less. In Formula (20), in the case that a₁ represents an integer of 2 or more and 5 or less, a plurality of R¹¹ groups may represent identical groups or different groups. In the case that a₂ represents an integer of 2 or more and 5 or less, a plurality of R¹² groups may represent identical groups or different groups. In the case that as represents an integer of 2 or more and 5 or less, a plurality of R¹³ groups may represent identical groups or different groups. In the case that a₄ represents an integer of 2 or more and 5 or less, a plurality of R¹⁴ groups may represent identical groups or different groups. In Formula (20), R¹¹, R¹², R¹³ and R¹⁴ preferably each independently represent an alkyl group having one or more and three or less carbon atoms, and more preferably each independently represent a methyl group or an ethyl group. a₁, a₂, a₃ and a₄ preferably each independently represent an integer of 1 or more and 3 or less, and more preferably each independently represent 1.

In Formula (21), R²¹, R²² and R²³ each independently represent an alkyl group having one or more and six or less carbon atoms. R²⁴, R²⁵ and R²⁶ each independently represent a hydrogen atom or an alkyl group having one or more and six or less carbon atoms, b₁, b₂ and b₃ each independently represent 0 or 1. In Formula (21), R²¹, R²² and R²³ preferably each independently represent an alkyl group having one or more and three or less carbon atoms, and more preferably each independently represent a methyl group. R²¹, R²² and R²³ are preferably bonding to the meta position of the corresponding phenyl group to the ethenyl group or butadienyl group. R²⁴, R²⁵, and R²⁶ preferably each represent a hydrogen atom. b₁, b₂ and b₃ preferably each represent 0, or each represent 1.

In Formula (22), R³¹, R³² and R³³ each independently represent an alkyl group having one or more and six or less carbon atoms. R³⁴ represents an alkyl group having one or more and six or less carbon atoms or a hydrogen atom. d₁, d₂ and d₃ each independently represent an integer of 0 or more and 5 or less. In Formula (22), in the case that d₁ represents an integer of 2 or more and 5 or less, a plurality of R³¹ groups may represent identical groups or different groups. In the case that d₂ represents an integer of 2 or more and 5 or less, a plurality of R³² groups may represent identical groups or different groups. In the case that d₃ represents an integer of 2 or more and 5 or less, a plurality of R³³ groups may represent identical groups or different groups. In Formula (22), R³⁴ preferably represents a hydrogen atom. d₁, d₂ and d₃ preferably each represent 0.

In Formula (23), R⁴¹, R⁴², R⁴³, R⁴⁴, R⁴⁵ and R⁴⁶ each independently represent an alkyl group having one or more and six or less carbon atoms, or a phenyl group. R⁴⁷ and R⁴⁸ each independently represent a hydrogen atom, an alkyl group having one or more and six or less carbon atoms, or a phenyl group. e₁, e₂, e₃ and e₄ each independently represent an integer of 0 or more and 5 or less. e₅ and e₆ each independently represent an integer of 0 or more and 4 or less. e₇ and e₈ each independently represent 0 or 1. In Formula (23), in the case that e₁ represents an integer of 2 or more and 5 or less, a plurality of R⁴¹ groups may represent identical groups or different groups. In the case that e₂ represents an integer of 2 or more and 5 or less, a plurality of R⁴² groups may represent identical groups or different groups. In the case that e₃ represents an integer of 2 or more and 5 or less, a plurality of R⁴³ groups may represent identical groups or different groups. In the case that e₄ represents an integer of 2 or more and 5 or less, a plurality of R⁴⁴ groups may represent identical groups or different groups. In the case that e₅ represents an integer of 2 or more and 4 or less, a plurality of R⁴⁵ groups may represent identical groups or different groups. In the case that e₆ represents an integer of 2 or more and 4 or less, a plurality of R⁴⁶ groups may represent identical groups or different groups. In Formula (23), R⁴¹ to R⁴⁶ preferably each independently represent an alkyl group having one or more and six or less carbon atoms, more preferably each independently represent an alkyl group having one or more and three or less carbon atoms, and even more preferably each independently represent a methyl group or an ethyl group. R⁴⁷ and R⁴⁸ preferably each represent a hydrogen atom. e₁, e₂, e₃ and e₄ preferably each independently represent an integer of 0 or more and 2 or less, and more preferably e₁ and e₂ each represent 0 and e₃ and e₄ each represent 2. e₅ and e₆ preferably each represent 0. e₇ and e₈ preferably each represent 0 or each represent 1.

In Formula (24), R⁵⁰ and R⁵¹ each independently represent an alkyl group having one or more and six or less carbon atoms, an alkoxy group having one or more and six or less carbon atoms, or a phenyl group. R⁵², R⁵³, R⁵⁴, R⁵⁵, R⁵⁶, R⁵⁷ and R⁵⁸ each independently represent a hydrogen atom, an alkyl group having one or more and six or less carbon atoms, an alkoxy group having one or more and six or less carbon atoms, or a phenyl group optionally substituted with an alkyl group having one or more and six or less carbon atoms, f₁ and f₂ each independently represent an integer of 0 or more and 2 or less. f₃ and f₄ each independently represent an integer of 0 or more and 5 or less. In Formula (24), in the case that f₃ represents an integer of 2 or more and 5 or less, a plurality of R⁵⁰ groups may represent identical groups or different groups. In the case that f₄ represents an integer of 2 or more and 5 or less, a plurality of R⁵¹ groups may represent identical groups or different groups. In Formula (24), R⁵⁰ and R⁵¹ preferably each independently represent an alkyl group having one or more and six or less carbon atoms. R⁵² and R⁵³ preferably each represent a hydrogen atom or a phenyl group optionally substituted with an alkyl group having one or more and six or less carbon atoms. R⁵⁴ to R⁵⁸ preferably each independently represent a hydrogen atom, an alkyl group having one or more and six or less carbon atoms, or an alkoxy group having one or more and six or less carbon atoms, f₁ and f₂ preferably each represent 0, or each represent 1, or each represent 2. f₃ and f₄ preferably each independently represent 0 or 1. The alkyl group having one or more and six or less carbon atoms, the alkyl group represented by R⁵⁰ and R⁵¹, is preferably an alkyl group having one or more and three or less carbon atoms, and more preferably a methyl group. The phenyl group optionally substituted with an alkyl group having one or more and six or less carbon atoms, the phenyl group represented by R⁵² and R⁵³, is preferably a phenyl group, or a phenyl group substituted with an alkyl group having one or more and three or less carbon atoms at one or more and five or less positions. The phenyl group substituted with an alkyl group having one or more and three or less carbon atoms is preferably a methylphenyl group, and more preferably a 4-methylphenyl group. The alkyl group having one or more and six or less carbon atoms, the alkyl group represented by R⁵⁴ to R⁵⁸, is preferably an alkyl group having one or more and four or less carbon atoms, and preferably a methyl group, an ethyl group, or a n-butyl group. The alkoxy group having one or more and six or less carbon atoms, the alkoxy group represented by R⁵⁴ to R⁵⁸, is preferably an alkoxy group having one or more and three or less carbon atoms, and more preferably an ethoxy group.

In Formula (25), R⁶¹, R⁶², R⁶¹, R⁶⁴, R⁶⁵ and R⁶⁶ each independently represent an alkyl group having one or more and eight or less carbon atoms, a phenyl group, or an alkoxy group having one or more and eight or less carbon atoms, h1, h2, h4 and h5 each independently represent an integer of 0 or more and 5 or less, and h3 and h6 each independently represent an integer of 0 or more and 4 or less.

Preferred examples of charge transport compound (20) include a compound represented by Formula (H-11). Preferred examples of charge transport compound (21) include compounds represented by Formulas (H-7) and (H-8). Preferred examples of charge transport compound (22) include a compound represented by Formula (H-6). Preferred examples of charge transport compound (23) include compounds represented by Formulas (H-9) and (H-10). Preferred examples of charge transport compound (24) include compounds represented by Formulas (H-1), (H-2), (H-3) and (H-5). Preferred examples of charge transport compound (25) include a compound represented by Formula (H-4). Hereinafter, the compounds represented by Formulas (H-1) to (H-11) are occasionally expressed as charge transport compounds (H-1) to (H-11).

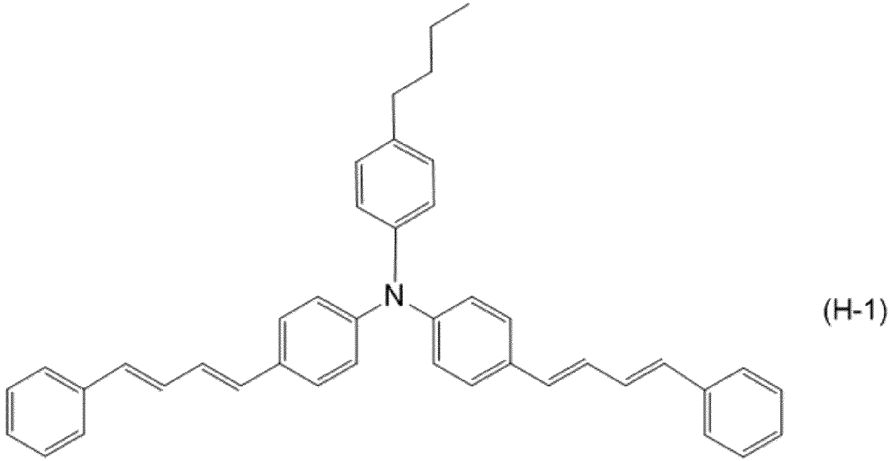

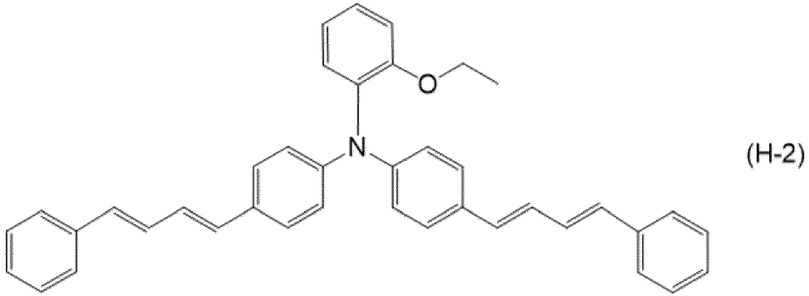

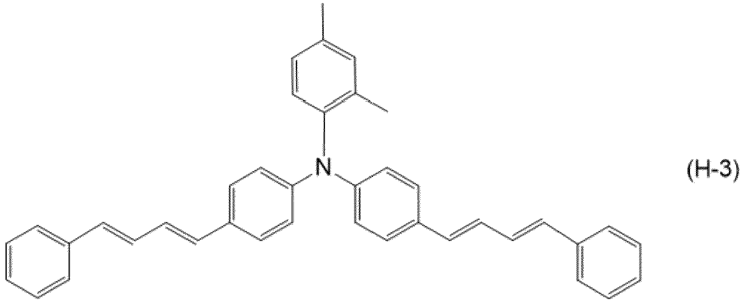

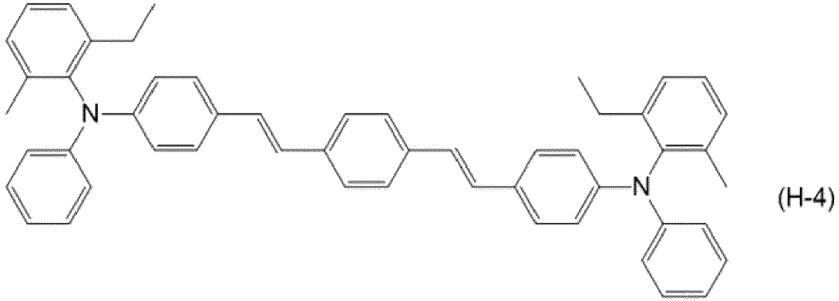

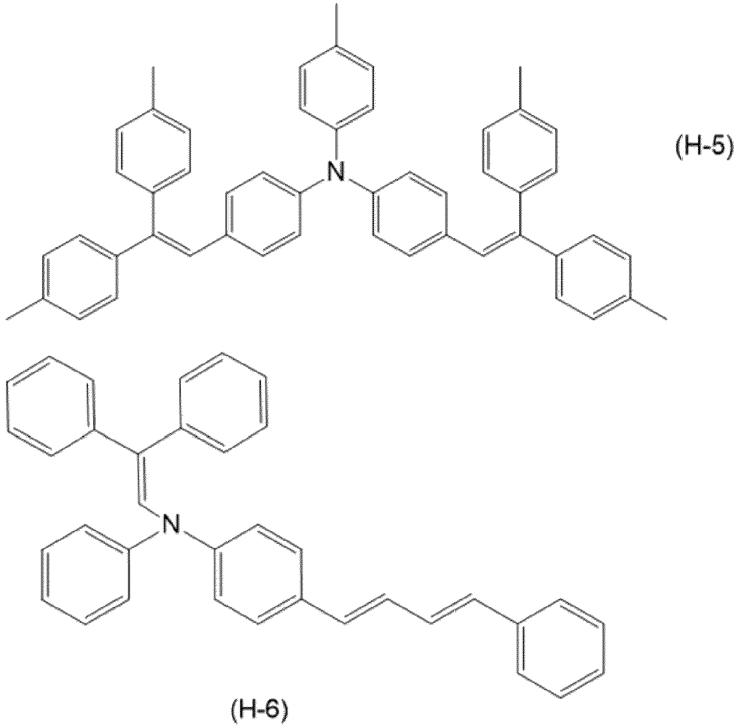

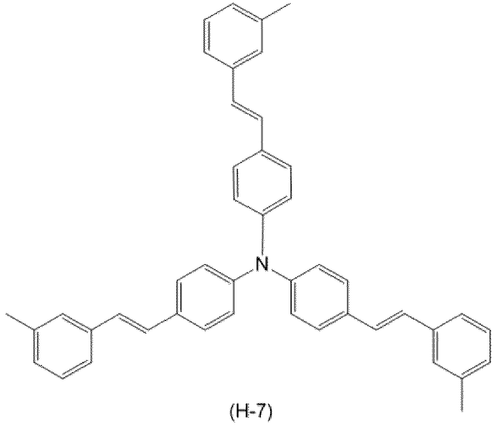

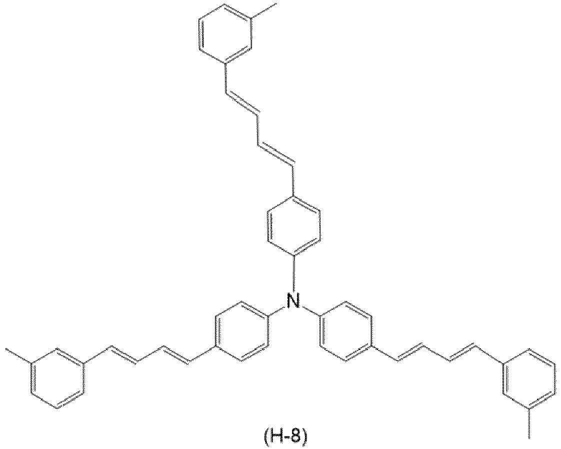

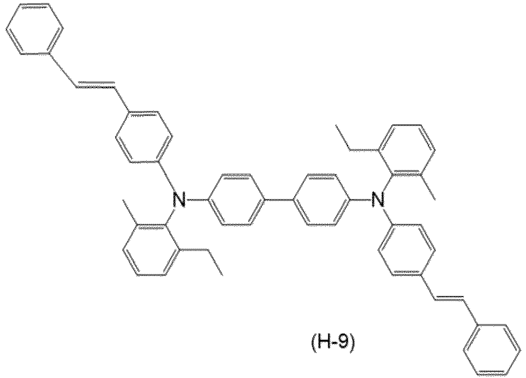

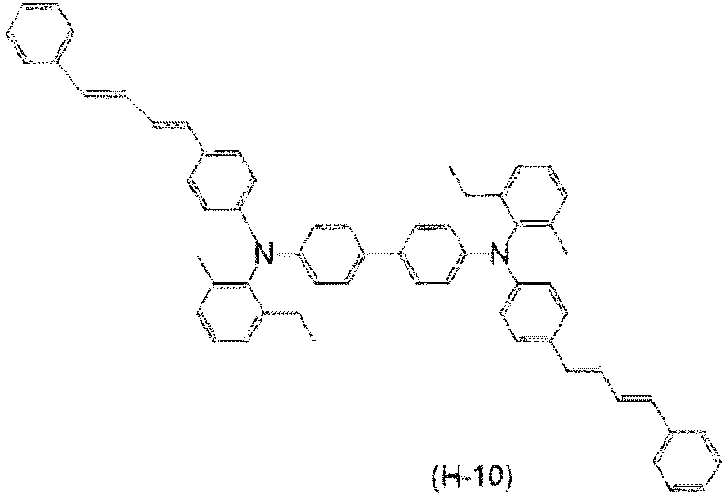

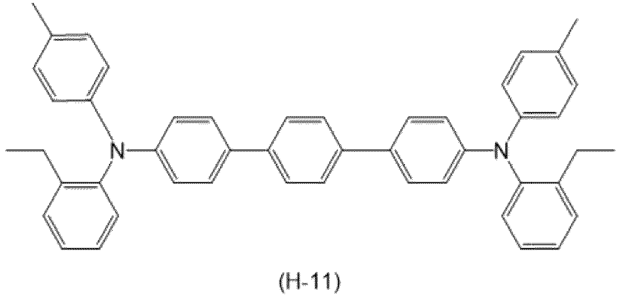

The content of the charge transport material is preferably 10 parts by mass or more and 200 parts by mass or less, more preferably 30 parts by mass or more and 120 parts by mass or less, and even more preferably 50 parts by mass or more and 100 parts by mass or less, based on 100 parts by mass of the binder resin. The photosensitive layer may contain only one charge transport compound, or two or more charge transport compounds. The photosensitive layer may further contain a charge transport compound other than charge transport compounds (20), (21), (22), (23), (24) and (25) (hereinafter, occasionally referred to as an additional electron transport compound or electron transport material). Examples of the additional charge transport compound include triphenylamine derivatives, diamine derivatives (e.g., N,N,N',N'-tetraphenylbenzidine derivatives, N,N,N',N'-tetraphenylphenylenediamine derivatives, N,N,N',N'-tetraphenylnaphthylenediamine derivatives, N,N,N',N'-tetraphenylphenanthrylenediamine derivatives and di(aminophenylethenyl)benzene derivatives), oxadiazole compounds (e.g., 2,5-di(4-methylaminophenyl)-1,3,4-oxadiazole), styryl compounds (e.g., 9-(4-diethylaminostyryl)anthracene), carbazole compounds (e.g., polyvinylcarbazole), organic polysilane compounds, pyrazoline compounds (e.g., 1-phenyl-3- (p-dimethylaminophenyl)pyrazoline), hydrazone compounds, indole compounds, oxazole compounds, isoxazole compounds, thiazole compounds, thiadiazole compounds, imidazole compounds, pyrazole compounds and triazole compounds.

The charge transport layer may contain an additive such as an antioxidant, an ultraviolet absorber, a plasticizer, a leveling agent, a lubricating agent and a wear resistance enhancer. Specific examples include hindered phenol compounds, hindered amine compounds, sulfur compounds, phosphorous compounds, benzophenone compounds, siloxane-modified resin, silicone oil, a fluororesin particle, a polystyrene resin particle, a polyethylene resin particle, a silica particle, an alumina particle and a boron nitride particle.

The average thickness of the charge transport layer is preferably 5 µm or more and 50 µm or less, and more preferably 8 µm or more and 40 µm or less.

The charge transport layer can be formed in such a manner that a coating solution for a charge transport layer, the coating solution containing the above materials and a solvent, is prepared, and a coating film is formed with the coating solution, and dried. Examples of the solvent that is used for the coating solution include alcoholic solvents, ketone solvents, ether solvents, ester solvents and aromatic hydrocarbon solvents. Among these solvents, ether solvents or aromatic hydrocarbon solvents are preferred.

### (2) Monolayer-type Photosensitive Layer

The monolayer-type photosensitive layer can be formed in such a manner that a coating solution for a photosensitive layer, the coating solution containing a charge generation material, a charge transport material, a resin and a solvent, is prepared and a coating film is formed with the coating solution, and dried. Examples of the charge generation material, charge transport material and resin are the same as examples of materials shown above in "(1) Laminate-type Photosensitive Layer".

### [Toner]

The toner according to the present invention contains: a toner particle containing a binder resin; and an external additive, and the toner contains strontium titanate as such an external additive. The strontium titanate can modulate the chargeability and fluidity of the toner. The content of the strontium titanate is 0.05 to 5.0 parts by mass based on 100.0 parts by mass of the toner particle. The content is preferably 0.1 to 1.0% by mass.

### <Binder Resin>

The binder resin that the toner particle according to the present invention contains is not limited to a particular binder resin and a known binder resin can be used; however, vinyl resin, polyester resin and the like are preferred. Examples of vinyl resin, polyester resin and other binder resins include the following resins or polymers.

Homopolymers of styrene and substituted forms thereof such as polystyrene and polyvinyltoluene; styrenic copolymers such as styrene-propylene copolymer, styrene-vinyltoluene copolymer, styrene-vinylnaphthalene copolymer, styrene-methyl acrylate copolymer, styrene-ethyl acrylate copolymer, styrene-butyl acrylate copolymer, styrene-octyl acrylate copolymer, styrene-dimethylaminoethyl acrylate copolymer, styrene-methyl methacrylate copolymer, styrene-ethyl methacrylate copolymer, styrene-butyl methacrylate copolymer, styrene-dimethylaminoethyl methacrylate copolymer, styrene-vinyl methyl ether copolymer, styrene-vinyl ethyl ether copolymer, styrene-vinyl methyl ketone copolymer, styrene-butadiene copolymer, styrene-isoprene copolymer, styrenemaleic acid copolymer and styrene-maleate copolymer; polymethyl methacrylate, polybutyl methacrylate, polyvinyl acetate, polyethylene, polypropylene, polyvinylbutyral, silicone resin, polyamide resin, epoxy resin, polyacrylic resin, rosin, modified rosin, terpene resin, phenolic resin, aliphatic or alicyclic hydrocarbon resin and aromatic petroleum resin. These binder resins may be used alone, or used as a mixture. The binder resin is preferably a styrenic copolymer.

The binder resin preferably contains a carboxy group, and the binder resin is preferably a resin produced with a polymerizable monomer containing a carboxy group.

Examples of the polymerizable monomer containing a carboxy group include acrylic acid, methacrylic acid; an α-alkyl derivative or β-alkyl derivative of acrylic acid or methacrylic acid such as α-ethylacrylic acid and crotonic acid; an unsaturated dicarboxylic acid such as fumaric acid, maleic acid, citraconic acid and itaconic acid; and an unsaturated dicarboxylic acid monoester derivative such as succinic acid monoacryloyloxyethyl ester, succinic acid monoacryloyloxyethylene ester, phthalic acid monoacryloyloxyethyl ester and phthalic acid monomethacryloyloxyethyl ester.

A polycondensation product of a carboxylic acid component and alcohol component shown below can be used as the polyester resin.

Examples of the carboxylic acid component include terephthalic acid, isophthalic acid, phthalic acid, fumaric acid, maleic acid, cyclohexanedicarboxylic acid and trimellitic acid. Examples of the alcohol component include bisphenol A, hydrogenated bisphenol, an ethylene oxide adduct of bisphenol A, a propylene oxide adduct of bisphenol A, glycerin, trimethylolpropane and pentaerythritol.

The polyester resin may be one containing a urea group. A carboxy group such as one at an end in the polyester resin is preferably not capped.

### <Wax>

The toner according to the present invention may contain a wax. Waxes that are preferably used are as described above. The content of the wax is preferably 5.0 parts by mass or more and 20.0 parts by mass or less, based on 100.0 parts by mass of the binder resin or the polymerizable monomer to produce the binder resin.

### <Coloring Agent>

A known coloring agent can be used without any particular limitation.

Examples of applicable yellow pigments include yellow iron oxide, Napels Yellow, Naphthol Yellow S, condensed azo compounds such as Hansa Yellow G, Hansa Yellow 10G, Benzidine Yellow G, Benzidine Yellow GR, Quinoline Yellow Lake, Permanent Yellow NCG and Tartrazine lake, isoindolinone compounds, anthraquinone compounds, azo metal complexes, methine compounds and allylamide compounds. Specific examples include the followings.

C. I. Pigment Yellows 12, 13, 14, 15, 17, 62, 74, 83, 93, 94, 95, 109, 110, 111, 128, 129, 147, 155, 168, 180, 185, 193.

Examples of red pigments include red ocher, condensed azo compounds such as Permanent Red 4R, Lithol Red, Pyrazolone Red, Watchung Red calcium salt, Lake Red C, Lake Red D, Brilliant Carmine 6B, Brilliant Carmine 3B, Eoxin Lake, Rhodamine Lake B and Alizarin Lake, diketopyrrolopyrrole compounds, anthraquinone compounds, quinacridone compounds, basic lake dye compounds, naphthol compounds, benzimidazolone compounds, thioindigo compounds and perylene compounds. Specific examples include the followings. C. I. Pigment Reds 2, 3, 5, 6, 7, 23, 48:2, 48:3, 48:4, 57:1, 81:1, 122, 144, 146, 150, 166, 169, 177, 184, 185, 202, 206, 220, 221, 254.

Examples of blue pigments include copper phthalocyanine compounds and derivatives thereof such as Alkali Blue Lake, Victoria Blue Lake, Phthalocyanine Blue, metal-free Phthalocyanine Blue, Phthalocyanine Blue partial chloride, First Sky Blue and Indanthrene Blue BG, anthraquinone compounds and basic lake dye compounds. Specific examples include the followings. C. I. Pigment Blues 1, 7, 15, 15:1, 15:2, 15:3, 15:4, 60, 62, 66.

Examples of black pigments include carbon black, Aniline Black, non-magnetic ferrite, magnetite and pigments obtained by blackening with the above yellow coloring agents, red coloring agents and blue coloring agents. Those coloring agents can be used alone, or as a mixture, or even in a state of solid solution.

As necessary, the coloring agent may be surface-treated with a substance that does not cause polymerization inhibition. The content of the coloring agent is preferably 3.0 parts by mass or more and 15.0 parts by mass or less based on 100.0 parts by mass of the binder resin or the polymerizable monomer to produce the binder resin.

### <Charge Control Agent>

The toner according to the present invention may contain a charge control agent. Known charge control agents can be used. In particular, charge control agents with high charging speed and capability of stably maintaining constant amounts of charge are preferred. Furthermore, in the case that the toner particle is produced by a direct polymerization method, charge control agents that have low polymerization inhibitory activity and are substantially free of a solubilized product in an aqueous medium are preferred.

Examples of charge control agents that control the toner particle to have a negative charge include the followings.

Organometal compounds and chelating compounds including monoazo metal compounds and acetylacetone metal compounds, and metal compounds with oxycarboxylic acid and those with dicarboxylic acid such as aromatic oxycarboxylic acids and aromatic dicarboxylic acids. Other examples include aromatic oxycarboxylic acids and aromatic mono- and polycarboxylic acids and metal salts, anhydrides or esters thereof, and phenol derivatives such as bisphenol. Further examples include urea derivatives, metal-containing salicylic acid compounds, metal-containing naphthoic acid compounds, boron compounds, quaternary ammonium salts and calixarene.

These charge control agents may be contained alone; alternatively, two or more of the charge control agents may be contained in combination. The amount of the charge control agent to be added is preferably 0.01 parts by mass or more and 10.0 parts by mass or less to 100.0 parts by mass of the binder resin.

### <Toner External Additive>

For enhancement in fluidity, chargeability and blocking properties, the toner according to the present invention may contain an external additive in addition to strontium titanate.

Examples of the external additive include an inorganic fine particle such as a silica fine particle, alumina fine particle, and a titanium oxide fine particle. One of these external additives can be used alone; alternatively, two or more of the external additives can be used in combination. It is preferable that such an inorganic fine particle have been surface-treated with a silane coupling agent, titanium coupling agent, a higher fatty acid, silicone oil or the like for enhanced storability at high temperatures and enhanced environmental stability.

The total content of these various external additives is preferably 0.05 to 5.0 parts by mass based on 100.0 parts by mass of the toner particle. The content of the strontium titanate is preferably 0.1 to 1.0 parts by mass based on 100.0 parts by mass of the toner particle.

Known production methods can be used for the toner particle, and kneading-and-crushing methods and wet production methods can be used. Wet production methods are preferred for homogenization of particle size and shape controllability. Wet production methods include a suspension polymerization method, a dissolution/suspension method, an emulsion polymerization/aggregation method and an emulsion aggregation method, and the emulsion aggregation method is more preferred. That is, the toner particle is preferably an emulsion-aggregated toner particle.

In the emulsion aggregation method, first, a dispersion of materials including a fine particle of a binder resin and a coloring agent is prepared. The resulting dispersion of materials is dispersed and mixed with addition of a dispersion stabilizer, as necessary. Thereafter, the resultant is allowed to aggregate to a desired toner particle size with addition of a flocculant, and after or simultaneously with the aggregation, resin fine particles are fused together. In addition, shape control by heat is performed, as necessary, to form a toner particle.

The following dispersion stabilizers can be used.

Surfactants, e.g., known cationic surfactants, anionic surfactants and nonionic surfactants can be used.

Examples of inorganic dispersion stabilizers include tricalcium phosphate, magnesium phosphate, zinc phosphate, aluminum phosphate, calcium carbonate, magnesium carbonate, calcium hydroxide, magnesium hydroxide, aluminum hydroxide, calcium metasilicate, calcium sulfate, barium sulfate, bentonite, silica and alumina.

Examples of organic dispersion stabilizers include polyvinyl alcohol, gelatin, methylcellulose, methylhydroxypropylcellulose, ethylcellulose, sodium salt of carboxymethylcellulose and starch.

As the flocculant, not only surfactants having polarity reverse to the aforementioned surfactants that are used as the dispersion stabilizer, but also inorganic salts and divalent or higher-valent inorganic metal salts can be preferably used. In particular, inorganic metal salts are preferable because inorganic metal salts allow aggregability control and toner chargeability control with ease by ionizing multivalent metal elements in aqueous media. Specific examples of preferred inorganic metal salts include metal salts such as calcium chloride, calcium nitrate, barium chloride, magnesium chloride, zinc chloride, iron chloride, aluminum chloride and aluminum sulfate, and polymers of an inorganic metal salt such as poly iron chloride, poly silica iron, poly aluminum chloride, poly aluminum hydroxide and calcium polysulfide. Among them, aluminum salts and polymers thereof and poly silica iron are particularly preferred. In general, in order to obtain sharper particle size distribution, being divalent is preferred to being monovalent, and being trivalent or higher-valent is preferred to being divalent for inorganic metal salts, and, for the same valence, inorganic metal salt polymers are more suitable than inorganic metal salts.

As an apparatus for external addition, for example, a double cone mixer, a V-shape mixer, a drum mixer, a Super Mixer, an FM mixer (manufactured by NIPPON COKE & ENGINEERING CO., LTD.), a Nauta mixer or a MECHANO HYBRID can be used. In preparation of the toner, the rotational frequency, treatment time and water temperature and/or water volume in a jacket in the apparatus for external addition can be adjusted to control the state of covering with the external additive.

For high-definition and high-resolution images, the weight-average particle size of the toner particle is preferably 3.0 µm or more and 10.0 µm or less.

### <Process Cartridge and Electrophotographic Apparatus>

FIGURE shows an example of a schematic configuration of an electrophotographic apparatus with a process cartridge including an electrophotographic photosensitive member. In FIGURE, the reference sign 1 indicates a cylindrical (drum-shaped) electrophotographic photosensitive member, which is rotationally driven around a shaft 2 in the direction of an arrow at a specific rotational speed (process speed).

The surface of the electrophotographic photosensitive member 1 is charged with electricity to a specific positive or negative potential by a charging unit 3 during rotation. Subsequently, the charged surface of the electrophotographic photosensitive member 1 is irradiated with exposure light 4 from an exposing unit (not shown), and an electrostatic latent image corresponding to given image information is formed. The image exposure light 4 is light that is outputted from an exposing unit, such as slit exposure and laser beam scanning exposure, and has been subjected intensity modulation according to a time series of electric digital image signals for the given image information.

To the electrostatic latent image formed on the surface of the electrophotographic photosensitive member 1, a toner contained in a developing unit 5 is fed and the electrostatic latent image is developed (normal development or reversal development), resulting in the formation of a toner image on the surface of the electrophotographic photosensitive member 1. The toner image formed on the surface of the electrophotographic photosensitive member 1 is then transferred onto a transfer medium 7 by a transferring unit 6. At that time, a bias voltage having polarity reverse to the charge possessed by the toner is applied from a bias power source (not shown) to the transferring unit 6. In the case that the transfer medium 7 is a paper sheet, the transfer medium 7 is taken out from a sheet-feeding part (not shown), and sent between the electrophotographic photosensitive member 1 and the transferring unit 6 synchronously with the rotation of the electrophotographic photosensitive member 1.

The transfer medium 7, onto which the toner image has been transferred from the electrophotographic photosensitive member 1, is separated from the surface of the electrophotographic photosensitive member 1, and then conveyed to a fixing unit 8 and subjected to fixing treatment for the toner image, and the image is printed out of the electrophotographic apparatus as an image-bearing product (print, copy). The surface of the electrophotographic photosensitive member 1 after transferring the toner image onto the transfer medium 7 is removed of attached matters such as the toner (residual toner) by a cleaning unit 9, thus cleaned. Cleaner-less systems that have been recently developed allow residual toners to be removed directly in a developer or another unit. The surface of the electrophotographic photosensitive member 1 is further electrically neutralized with front exposure light 10 from a front exposing unit (not shown), and then used again for image formation. In the case that the charging unit 3 is a contact charging unit with a charging roller or the like, the front exposing unit is not necessarily needed. In the present invention, a plurality of constituent units among the aforementioned constituent elements including the electrophotographic photosensitive member 1, the charging unit 3, the developing unit 5 and the cleaning unit 9 is accommodated in a container and integrally supported to form a process cartridge. The process cartridge can be installed in a main body of an electrophotographic apparatus in an attachable and detachable manner. For example, at least one selected from the charging unit 3, the developing unit 5 and the cleaning unit 9 is integrally supported together with the electrophotographic photosensitive member 1 to form a cartridge. A process cartridge 11 attachable to and detachable from a main body of an electrophotographic apparatus is achieved with guide units 12 such as rails of a main body of an electrophotographic apparatus. In the case that the electrophotographic apparatus is a copier or a printer, the exposure light 4 may be reflected light or transmitted light from an original image. Alternatively, the exposure light 4 may be light emitted through scanning with a laser beam, driving of LED arrays, or driving of liquid crystal shutter arrays, each performed according to signals given by reading and signalizing an original image with a sensor.

The electrophotographic photosensitive member 1 can also be widely applied to the field of electrophotographic application such as laser beam printers, CRT printers, LED printers, faxes, liquid crystal printers and laser engraving.

### [Examples]

Hereinafter, the present invention will be described in more detail with examples and comparative examples. The present invention is not limited to the examples below in any way, unless any deviation from the scope is caused. In the description of the examples below, "part" is based on mass, unless otherwise stated.

### [Resin X]

### (Resin X (P1))

As a synthesis example, a method for synthesizing a resin X represented by (P1) shown below will be demonstrated in the following.

A dicarboxylic acid chloride having a structure represented by Formula (DC-1) below was dissolved in dichloromethane to prepare an acid chloride solution.

Separately from the acid chloride solution, bisphenols having structures represented by Formula (BP-1) and Formula (BP-2) below were mixed at a mole ratio of 27:23, and dissolved in 10% sodium hydroxide aqueous solution, to which tributylbenzylammonium chloride was added as a polymerization catalyst, and the resultant was stirred to prepare a bisphenol solution.

Subsequently, the acid chloride solution was added to the bisphenol solution with stirring to initiate polymerization. The polymerization was performed with stirring for 3 hours while a reaction temperature of 25°C or less was kept.

Thereafter, acetic acid was added to terminate the polymerization reaction, and washing with water was repeated until the aqueous layer became neutral.

After the washing, the resultant was added dropwise to methanol under stirring to precipitate the polymerization product, which was vacuum-dried to afford a resin X represented by (P1). The viscosity-average molecular weight of obtained (P1) was found to be 46,000. Subscripts in the formulas (e.g., the two numerical values 54.0 and 46.0 in Formula P1) indicate the mole ratio (copolymerization ratio) between the corresponding units.

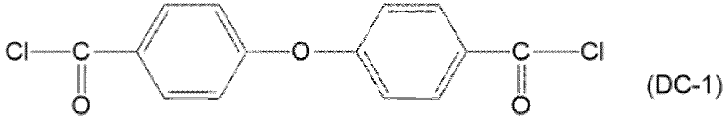

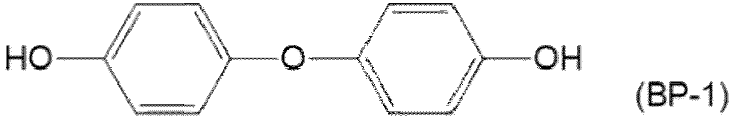

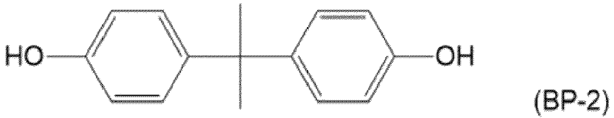

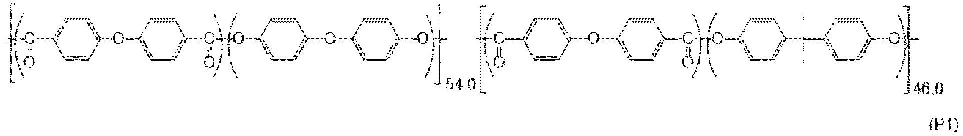

### (Resins X (P2) to (P15), (P26))

Resins X (P2) to (P15) and (P26) were produced in the same manner as in production of resin X (P1), except that the bisphenols to be used were changed and the ratio was adjusted to that shown in Table 1. Table 1 also shows the viscosity-average molecular weights of the resins X.

**[Table 1]**

| Polyarylate resin | Structural unit of Formula (1) | Structural unit of Formula (2) | n2/n1 | Viscosity-average molecular weight |
|---|---|---|---|---|
| P1 | (1) | (2-0) | - | 46000 |
| P2 | (1) | (2-0) | - | 46600 |
| P3 | (1) | (2-1) | 0.85 | 44000 |
| P4 | (1) | (2-1) | 1.00 | 45300 |
| P5 | (1) | (2-2) | 1.00 | 48100 |
| P6 | (1) | (2-3) | 1.00 | 45200 |
| P7 | (1) | (2-4) | 1.00 | 49200 |
| P8 | (1) | (2-5) | 1.00 | 45800 |
| P9 | (1) | (2-5) | 0.85 | 41300 |
| P10 | (1) | (2-1) | 3.00 | 43500 |
| P11 | (1) | (2-2) | 3.00 | 42600 |
| P12 | (1) | (2-3) | 3.00 | 43300 |
| P13 | (1) | (2-4) | 3.00 | 45900 |
| P14 | (1) | (2-5) | 3.00 | 43200 |
| P15 | (1) | (2-1) | 4.00 | 42500 |
| P26 | (1) | (2-5) | 4.00 | 42900 |

The structures of resins X (P2) to (P15) and (P26) are shown in the following.

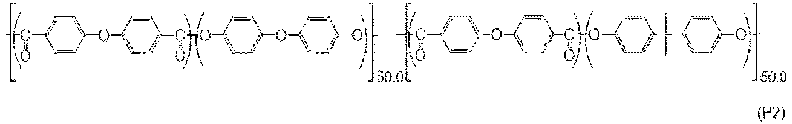

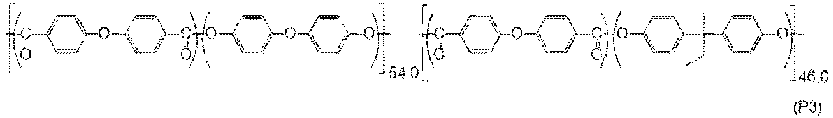

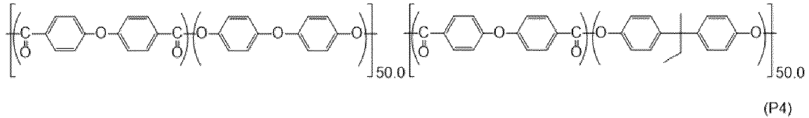

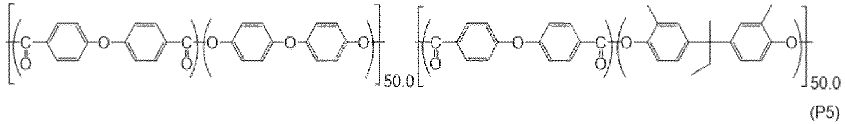

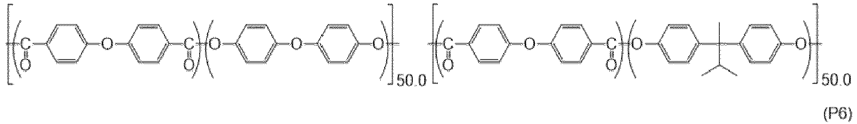

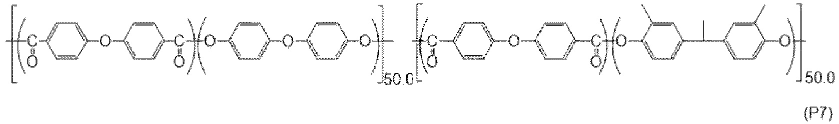

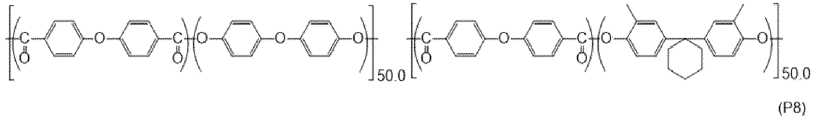

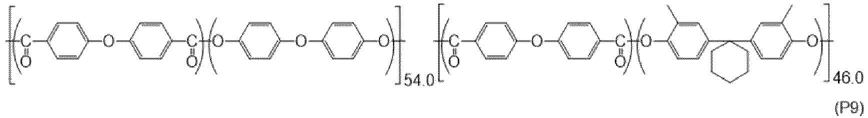

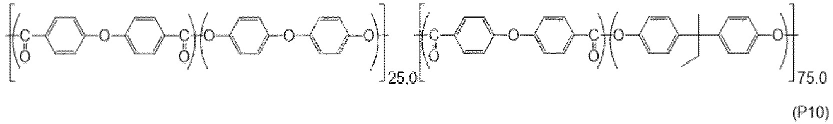

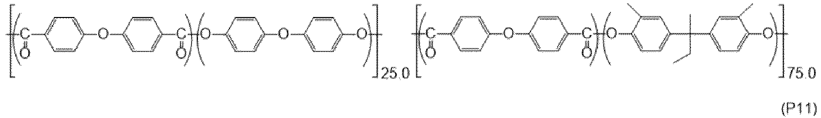

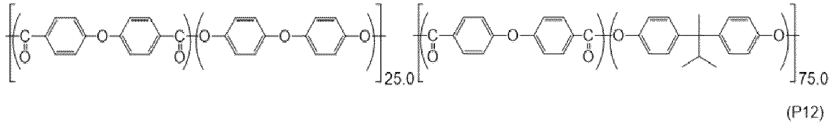

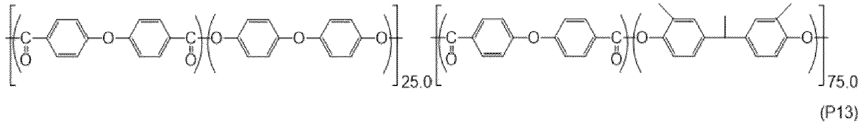

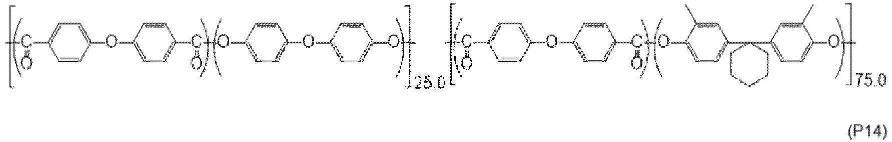

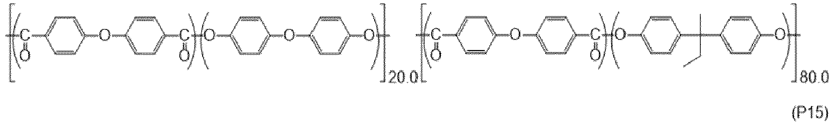

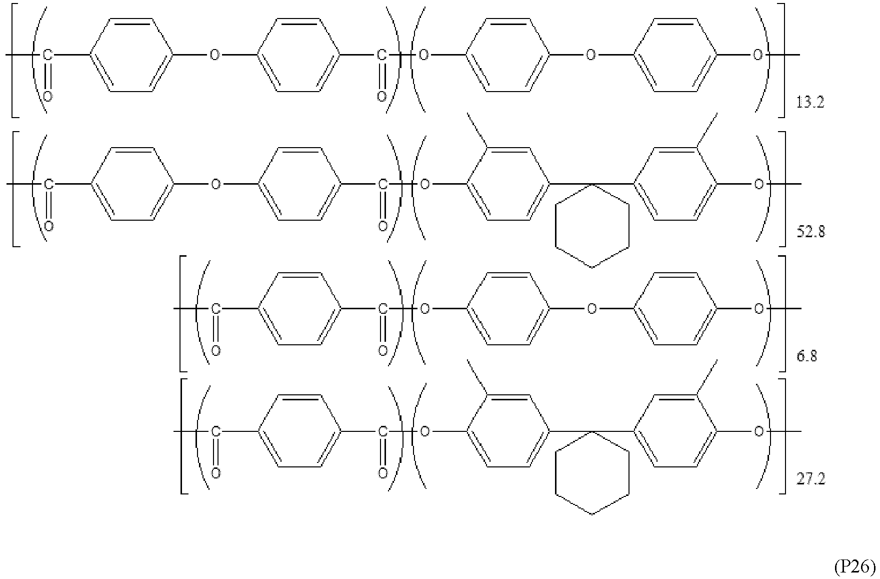

### <Production of Electrophotographic Photosensitive Member>

The thickness of each layer of an electrophotographic photosensitive member, except a charge generation layer, was determined by a method with an eddy-current thickness meter (Fischerscope, manufactured by FISCHER INSTRUMENTS K.K.) or a method of converting mass per unit area with specific gravity. The thickness of a charge generation layer was measured in such a manner that a spectrodensitometer (product name: X-Rite504/508, manufactured by X-Rite, Inc.) was pressed onto a surface of a photosensitive member to measure the Macbeth density value of the photosensitive member, and the Macbeth density value was converted with a calibration curve acquired in advance from thickness measurements obtained by cross-sectional SEM image observation.

### [Photosensitive member 1]

### <Conductive Layer>

An aluminum cylinder (JIS-A3003, aluminum alloy) having a diameter of 24 mm and a length of 257.5 mm was used as a support (conductive support).

Subsequently, the following materials were prepared.
- Titanium oxide (TiO₂) particles (average primary particles size: 230 nm) covered with oxygen-deficient tin oxide (SnO₂) as metal oxide particles: 214 parts
- Phenolic resin (monomer/oligomer of phenolic resin) (product name: Plyophen J-325, manufactured by DIC Corporation, resin solid content: 60% by mass) as binder material: 132 parts
- 1-Methoxy-2-propanol as solvent: 98 parts

These were put in a sand mill with 450 parts of glass beads of 0.8 mm in diameter, and dispersed under conditions of rotational frequency: 2000 rpm, dispersion time: 4.5 hours, and preset temperature of cooling water: 18°C, giving a dispersion. This dispersion was removed of the glass beads through a mesh (mesh size: 150 µm). To the resulting dispersion, silicone resin particles (product name: TOSPEARL 120, manufactured by Momentive Performance Materials, Inc., average particle size: 2 µm) were added as a surface-roughening material. The amount of the added silicone resin particles was 10% by mass to the total mass of the metal oxide particles and the binder material in the dispersion removed of the glass breads. In addition, silicone oil (product name: SH28PA, manufactured by Dow Toray Co., Ltd.) in an amount of 0.01% by mass to the total mass of the metal oxide particles and the binder material in the dispersion was added as a leveling agent to the dispersion. Subsequently, a mixed solvent of methanol and 1-methoxy-2-propanol (mass ratio: 1:1) was added to the dispersion in such a manner that the total mass of the metal oxide particles, the binder material and the surface-roughening material in the dispersion (i.e., the mass of the solid content) reached 67% by mass to the mass of the dispersion. Thereafter, the resultant was stirred to prepare a coating solution for a conductive layer. The coating solution for a conductive layer was applied onto the support by dip coating, and the resultant was heated at 140°C for 1 hour to form a conductive layer of 30 µm in thickness.

### <Undercoat Layer>

Surface-treated titanium oxide (number-average primary particle size: 10 nm) was prepared. Titanium oxide was surface-treated with alumina and silica, and the surface-treated titanium oxide was further surface-treated with methylhydrogenpolysiloxane while being wet-dispersed. Subsequently, 2 parts by mass of the surface-treated titanium oxide, 1 part by mass of polyamide resin ("Amilan CM8000" manufactured by TORAY INDUSTRIES, INC., polyamide resin as quaternary copolymer of polyamide 6, polyamide 12, polyamide 66 and polyamide 610), 10 parts by mass of methanol, 1 part by mass of butanol, and 1 part by mass of toluene were mixed with a bead mill for 5 hours, giving a coating solution for an undercoat layer. Thereafter, the resulting coating solution for an undercoat layer was applied by dip coating onto the conductive substrate prepared as above to form a coating film, which was dried at 130°C for 30 minutes to form an undercoat layer of 1.5 µm in thickness. The conductive substrate used was a drum-shaped support made of aluminum.

### <Charge Generation Layer>

Y-type titanyl phthalocyanine (1.5 parts by mass) as a charge generation material and polyvinylacetal resin ("S-LEC BX-5" manufactured by SEKISUI CHEMICAL CO., LTD.) (1 part by mass) were added to a solvent containing propylene glycol monomethyl ether (40 parts by mass) and tetrahydrofuran (40 parts by mass). These materials and the solvent were mixed with a bead mill for 12 hours to disperse the materials in the solvent, giving a coating solution for a charge generation layer. The resulting coating solution for a charge generation layer was applied onto the undercoat layer by dip coating to form a coating film, which was dried by heating at a temperature of 100°C for 10 minutes to form a charge generation layer of 0.25 µm in thickness.

### <Charge Transfer Layer>

A coating solution for a charge transport layer was produced by mixing 6 parts by mass of (HTM-1) as a charge transport material, 4.5 parts by mass of resin X (P1) as a binder resin, 5.5 parts by mass of polyarylate resin (P16) containing a structural unit shown in a formula below, 67.5 parts by mass of tetrahydrofuran and 22.5 parts by mass of toluene. The resulting coating solution for a charge transport layer was applied onto the charge generation layer by dip coating to form a coating film, which was dried by heating at 120°C for 30 minutes to form a charge transport layer of 18 µm in thickness. 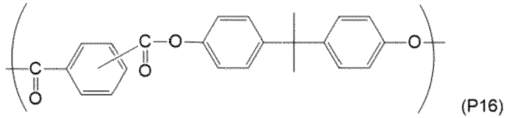 (Viscosity-average molecular weight: 40000)

### [Photosensitive members 2 to 29, Photosensitive members A to M]

Electrophotographic photosensitive members were produced according to [Photosensitive member 1] in the above, except that the charge transport material, the binder resin and the content of charge transport material based on the content of binder resin in the charge transport layer, that is, in the surface layer, were changed as shown in Table 2.

**[Table 2]**

| | Resin 1 | | Resin 2 | | Resin 3 | | Charge transport material | |
|---|---|---|---|---|---|---|---|---|
| | Type | Part by weight | Type | Part by weight | Type | Part by weight | Type | Part by weight |
| Photosensitive member 1 | P1 | 4.5 | P16 | 5.5 | - | - | HTM-1 | 6 |
| Photosensitive member 2 | P2 | 4.5 | P16 | 5.5 | - | - | HTM-1 | 6 |
| Photosensitive member 3 | P2 | 5 | P16 | 5 | - | - | HTM-1 | 6 |
| Photosensitive member 4 | P2 | 7.5 | P16 | 2.5 | - | - | HTM-1 | 6 |
| Photosensitive member 5 | P2 | 10 | - | - | - | - | HTM-1 | 6 |
| Photosensitive member 6 | P3 | 10 | - | - | - | - | HTM-1 | 6 |
| Photosensitive member 7 | P4 | 10 | - | - | - | - | HTM-1 | 6 |
| Photosensitive member 8 | P5 | 10 | - | - | - | - | HTM-1 | 6 |
| Photosensitive member 9 | P6 | 10 | - | - | - | - | HTM-1 | 6 |
| Photosensitive member 10 | P7 | 10 | - | - | - | - | HTM-1 | 6 |
| Photosensitive member 11 | P8 | 10 | - | - | - | - | HTM-1 | 6 |
| Photosensitive member 12 | P8 | 10 | - | - | - | - | HTM-2 | 10 |
| Photosensitive member 13 | P8 | 10 | - | - | - | - | HTM-3 | 6 |
| Photosensitive member 14 | P8 | 10 | - | - | - | - | HTM-4 | 6 |
| Photosensitive member 15 | P8 | 10 | - | - | - | - | HTM-5 | 6 |
| Photosensitive member 16 | P8 | 10 | - | - | - | - | HTM-6 | 6 |
| Photosensitive member 17 | P8 | 10 | - | - | - | - | HTM-7 | 6 |
| Photosensitive member 18 | P8 | 10 | - | - | - | - | HTM-8 | 6 |
| Photosensitive member 19 | P8 | 10 | - | - | - | - | HTM-9 | 6 |
| Photosensitive member 20 | P8 | 10 | - | - | - | - | HTM-10 | 6 |
| Photosensitive member 21 | P8 | 10 | - | - | - | - | HTM-11 | 6 |
| Photosensitive member 22 | P10 | 10 | - | - | - | - | HTM-1 | 6 |
| Photosensitive member 23 | P11 | 10 | - | - | - | - | HTM-1 | 6 |
| Photosensitive member 24 | P12 | 10 | - | - | - | - | HTM-1 | 6 |
| Photosensitive member 25 | P13 | 10 | - | - | - | - | HTM-1 | 6 |
| Photosensitive member 26 | P14 | 10 | - | - | - | - | HTM-1 | 6 |
| Photosensitive member 27 | P15 | 10 | - | - | - | - | HTM-1 | 6 |
| Photosensitive member 28 | P9 | 10 | - | - | - | - | HTM-1 | 6 |
| Photosensitive member 29 | P26 | 10 | - | - | - | - | HTM-1 | 6 |
| Photosensitive member A | P8 | 10 | - | - | - | - | HTM-1 | 6 |
| Photosensitive member B | P16 | 5 | P20 | 5 | - | - | HTM-1 | 6 |
| Photosensitive member C | P16 | 5 | P22 | 5 | - | - | HTM-1 | 6 |
| Photosensitive member D | P17 | 10 | - | - | - | - | HTM-1 | 6 |
| Photosensitive member E | P18 | 10 | - | - | - | - | HTM-1 | 6 |
| Photosensitive member F | P19 | 10 | - | - | - | - | HTM-1 | 6 |
| Photosensitive member G | P20 | 10 | - | - | - | - | HTM-1 | 6 |
| Photosensitive member H | P21 | 10 | - | - | - | - | HTM-1 | 6 |
| Photosensitive member I | P22 | 9.7 | - | - | - | - | HTM-1 | 6 |
| Photosensitive member J | P24 | 10 | - | - | - | - | HTM-1 | 6 |
| Photosensitive member K | P20 | 5 | P22 | 5 | - | - | HTM-1 | 6 |
| Photosensitive member L | P25 | 9.7 | - | - | - | - | HTM-1 | 6 |
| Photosensitive member M | Z Polyca | 10 | - | - | - | - | HTM-1 | 6 |

Polyarylate resins (P17) to (P22), (P24) and (P25) contain structural units represented by the following formulas: 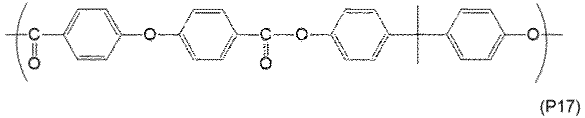 (Viscosity-average molecular weight: 42000) 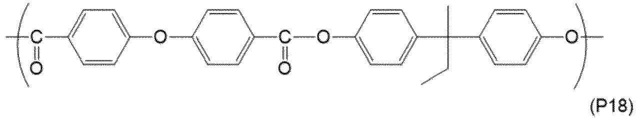 (Viscosity-average molecular weight: 42500) 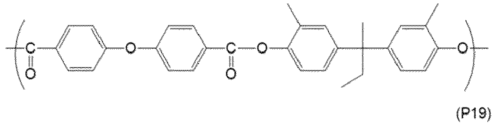 (Viscosity-average molecular weight: 42300) 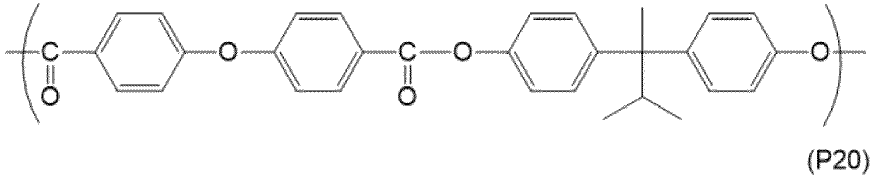 (Viscosity-average molecular weight: 43300) 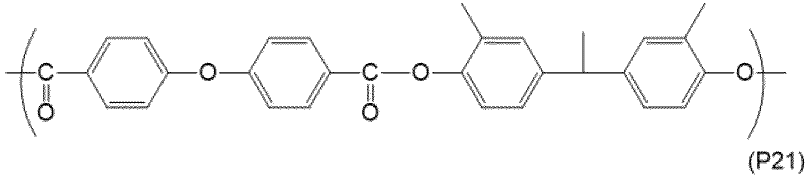 (Viscosity-average molecular weight: 41600) 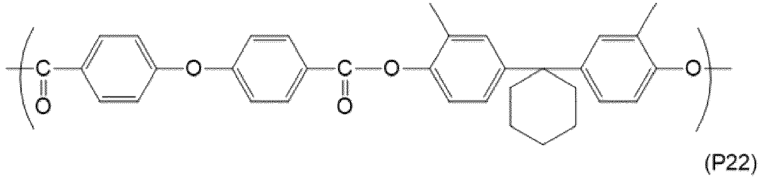 (Viscosity-average molecular weight: 42900) 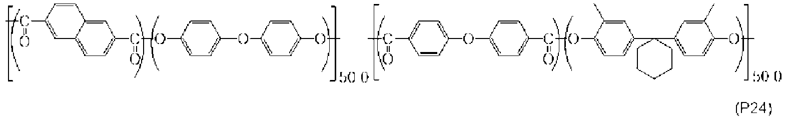 (Viscosity-average molecular weight: 45000) 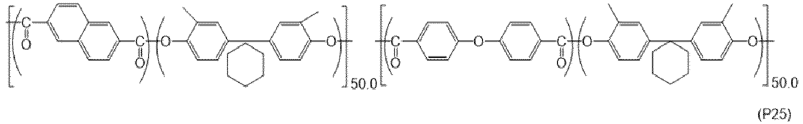 (Viscosity-average molecular weight: 46200)

### (Polycarbonate Resin)

The following polycarbonate resin was prepared.

"Iupilon Z400" manufactured by MITSUBISHI GAS CHEMICAL COMPANY, INC. (viscosity-average molecular weight: 40,000)

An example of production of a toner will be described in the following.

### <Example of Preparation of Binder Resin Particle Dispersion>

78. 0 parts of styrene, 20.7 parts of butyl acrylate, 1.3 parts of acrylic acid as a monomer to impart a carboxy group and 3.2 parts of n-lauryl mercaptan were mixed and dissolved. To this solution, an aqueous solution of 1.5 parts of NEOGEN RK (manufactured by DKS Co. Ltd.) in 150 parts of ion-exchanged water was added for dispersing.

Further, while the solution was slowly stirring, an aqueous solution of 0.3 parts of potassium persulfate in 10 parts of ion-exchanged water was added over 10 minutes. Following purging with nitrogen, emulsion polymerization was performed at 70°C for 6 hours. After the completion of the polymerization, the reaction solution was cooled to room temperature, and ion-exchanged water was added; thus, resin particle dispersion 1 having a solid content concentration of 12.5% by mass and a volume-based median diameter of 0.2 µm was obtained.

To measure the acid value, part of the obtained resin particles was washed with pure water and dried under reduced pressure to remove the surfactant. The acid value of the resin was measured and found to be 9.5 mgKOH/g.

### <Example of Preparation of Release Agent Dispersion>

Into 385 parts of ion-exchanged water, 100 parts of behenyl behenate (melting point: 72.1°C) and 15 parts of NEOGEN RK were mixed, and dispersed with the wet jet mill JN100 (manufactured by JOKOH CO., LTD.) for approximately 1 hour, giving a release agent dispersion. The concentration of the release agent dispersion was 20% by mass.

### <Example of Preparation of Coloring Agent Dispersion>

Into 885 parts of ion-exchanged water, 100 parts of the carbon black "Nipex35 (manufactured by Orion Engineered Carbons S.A.) and 15 parts of NEOGEN RK were mixed, and dispersed with the wet jet mill JN100 for approximately 1 hour, giving a coloring agent dispersion.

### <Example of Production of Toner 1>

With a homogenizer (manufactured by IKA: ULTRA-TURRAX T50), 265 parts of the resin particle dispersion, 1: 10 parts of the wax dispersion and 10 parts of the coloring agent dispersion were dispersed. The temperature in the container was adjusted to 30°C with stirring, and the pH was adjusted to 8.0 by addition of 1 mol/L sodium hydroxide aqueous solution.

As a flocculant, an aqueous solution of 0.25 parts of aluminum chloride dissolved in 10 parts of ion-exchanged water was added under stirring at 30°C over 10 minutes. After leaving for 3 minutes, temperature elevation was initiated, and the temperature was increased to 50°C to generate associated particles. With the state kept, the particle sizes of the associated particles were measured with a "Coulter Counter Multisizer 3" (registered trademark, manufactured by Beckman Coulter, Inc.). When the weight-average particle size reached 6.0 µm, 0.9 parts of sodium chloride and 5.0 parts of NEOGEN RK were added to terminate the particle growth.

The pH was adjusted to 9.0 by addition of 1 mol/L sodium hydroxide aqueous solution, and the temperature was then increased to 95°C for spheroidization of the aggregated particles. When the average circularity reached 0.980, temperature reduction was initiated, and the temperature was decreased to room temperature; thus, a toner particle dispersion was obtained.

Hydrochloric acid was added to the obtained toner particle dispersion to adjust the pH to 1.5 or less, the toner particle dispersion was stirred for 1 hour and left to stand, and then subjected to solid-liquid separation with a pressure filter, giving a toner cake. This was reslurried with ion-exchanged water again into a dispersion, and then subjected to solid-liquid separation with the aforementioned filtering device. The reslurrying and solid-liquid separation were repeated until the conductance of the filtrate reached 5.0 µS/cm or less, and final solid-liquid separation was then performed to give a toner cake. The resulting toner cake was dried and further classified with a classifier to reach a weight-average particle size (D4) of 6.0 µm, giving toner particles.

With an FM10C (manufactured by NIPPON COKE & ENGINEERING CO., LTD.), the thus-obtained toner particles (100 parts) were mixed with external addition of strontium titanate particles (0.7 parts) (number-average primary particle size: 70 nm) and silica particles surface-treated with dimethylsilicone oil (2.5 parts) (number-average primary particle size: 12 nm) as external additives. The conditions for the external addition were as follows. Lower blade: A0 blade; setting of interval between deflector and wall: 20 mm; amount of toner particles fed: 2.0 kg, rotational frequency: 66. 6 s⁻¹; time of external addition: 10 minutes; temperature and flow rate of cooling water: 20°C, 10 L/min.

Thereafter, the resultant was sieved through a mesh having a mesh size of 200 µm, giving a toner.

### <Example of Production of Toner 2>

Toner 2 was produced in the same manner as for toner 1 except that the flocculant, aluminum chloride, was replaced with the poly silica iron PSI-100 (manufactured by SUIDO KIKO KAISHA, LTD.).

### <Example of Production of Toner 3>

Toner 3 was produced in the same manner as for toner 1 except that the flocculant, aluminum chloride, was replaced with magnesium chloride.

### <Example 1>

### <Evaluation>

Evaluation was carried out with the electrophotographic photosensitive members and toners produced in the above. Table 3 shows the evaluation results.

A laser beam printer manufactured by Hewlett-Packard Company, product name: HP LaserJet Enterprise Color M553dn, was customized, and the customized model was used. The customization enabled the apparatus to control and measure voltages applied to the charging roller, to control and measure amounts of image exposure light, and to control and measure voltages applied in the transfer process.

A toner was removed from the black toner cartridge, and toner 1 produced was set in place of that toner. Photosensitive member 1 was attached to the black toner cartridge.

Subsequently, under a low-temperature/low-humidity environment at 15°C and 10% RH, an image of a test chart with a coverage rate of 1% was outputted on 10000 A4 normal paper sheets. For the charging conditions, the dark potential was adjusted to - 500V; for the exposure conditions, the amount of image exposure light was adjusted to 0.25 µJ/cm². The paper sheets used were the normal paper sheets CS-680 (68 g/m²) (Canon Marketing Japan Inc.).

### [Evaluation of Wear Resistance]

The amount of abrasion of a charge transport layer was determined from the difference between the thicknesses of the photosensitive member before and after the repeated image output on 10,000 sheets.

### [Evaluation of Transferability]

After the repeated image output on 10,000 sheets, a full solid image of 30 mm in width was outputted on the normal paper sheet CS-680 in the vertical direction, the outputting in the solid image formation was suspended, and a residual toner on the electrophotographic photosensitive member was collected with transparent tape made of transparent polyester (polyester tape 5511 Nichiban Co., Ltd.).

Measurement of the residual toner density was performed by the following procedure. The transparent tape with which the residual toner peeled from the surface of the electrophotographic photosensitive member was collected and unused transparent tape were each pasted on a high-grade white paper sheet (GFC081 CANON INC.). The density of the part with the transparent tape bearing the collected residual toner, D1, and the density of the part with the unused transparent tape, D0, were each measured with an X-Rite color reflection densitometer (X-rite 500 Series manufactured by X-Rite, Inc.).

The difference "D1 - D0" obtained in the measurement was defined as the density of the residual toner. Lower values of residual toner density indicate smaller amounts of a residual toner.

### (Evaluation Criteria)

A: the residual density was less than 0.02
B: the residual density was 0.02 or more and less than 0.06
C: the residual density was 0.06 or more and less than 0.10
D: the residual density was 0.10 or more

The results are shown in Table 3.

**[Table 3]**

| Example | Photosensitive member | Toner | Amount of chipped photosensitive member (µm/K) | Residual density |
|---|---|---|---|---|
| Example 1 | Photosensitive member 1 | Toner 1 | 0.23 | 0.05 |
| Example 2 | Photosensitive member 2 | Toner 1 | 0.23 | 0.04 |
| Example 3 | Photosensitive member 3 | Toner 1 | 0.22 | 0.04 |
| Example 4 | Photosensitive member 4 | Toner 1 | 0.21 | 0.04 |
| Example 5 | Photosensitive member 5 | Toner 1 | 0.20 | 0.04 |
| Example 6 | Photosensitive member 6 | Toner 1 | 0.20 | 0.04 |
| Example 7 | Photosensitive member 7 | Toner 1 | 0.18 | 0.03 |
| Example 8 | Photosensitive member 8 | Toner 1 | 0.17 | 0.03 |
| Example 9 | Photosensitive member 9 | Toner 1 | 0.18 | 0.03 |
| Example 10 | Photosensitive member 10 | Toner 1 | 0.18 | 0.03 |
| Example 11 | Photosensitive member 11 | Toner 1 | 0.17 | 0.02 |
| Example 12 | Photosensitive member 12 | Toner 1 | 0.22 | 0.02 |
| Example 13 | Photosensitive member 13 | Toner 1 | 0.17 | 0.02 |
| Example 14 | Photosensitive member 14 | Toner 1 | 0.18 | 0.02 |
| Example 15 | Photosensitive member 15 | Toner 1 | 0.17 | 0.02 |
| Example 16 | Photosensitive member 16 | Toner 1 | 0.17 | 0.02 |
| Example 17 | Photosensitive member 17 | Toner 1 | 0.18 | 0.02 |
| Example 18 | Photosensitive member 18 | Toner 1 | 0.18 | 0.02 |
| Example 19 | Photosensitive member 19 | Toner 1 | 0.18 | 0.02 |
| Example 20 | Photosensitive member 20 | Toner 1 | 0.18 | 0.02 |
| Example 21 | Photosensitive member 21 | Toner 1 | 0.18 | 0.02 |
| Example 22 | Photosensitive member 22 | Toner 1 | 0.20 | 0.04 |
| Example 23 | Photosensitive member 23 | Toner 1 | 0.21 | 0.04 |
| Example 24 | Photosensitive member 24 | Toner 1 | 0.20 | 0.04 |
| Example 25 | Photosensitive member 25 | Toner 1 | 0.20 | 0.04 |
| Example 26 | Photosensitive member 26 | Toner 1 | 0.20 | 0.04 |
| Example 27 | Photosensitive member 27 | Toner 1 | 0.23 | 0.05 |
| Example 28 | Photosensitive member 28 | Toner 1 | 0.20 | 0.03 |
| Example 29 | Photosensitive member 29 | Toner 1 | 0.16 | 0.01 |
| Example 30 | Photosensitive member 10 | Toner 2 | 0.17 | 0.03 |
| Example 31 | Photosensitive member 11 | Toner 2 | 0.17 | 0.02 |
| Example 32 | Photosensitive member 29 | Toner 2 | 0.16 | 0.01 |
| Example 33 | Photosensitive member 10 | Toner 3 | 0.19 | 0.04 |
| Example 34 | Photosensitive member 11 | Toner 3 | 0.19 | 0.03 |
| Example 35 | Photosensitive member 29 | Toner 3 | 0.16 | 0.02 |
| Comparative Example 1 | Photosensitive member A | Toner 1 | 0.29 | 0.09 |
| Comparative Example 2 | Photosensitive member B | Toner 1 | 0.29 | 0.10 |
| Comparative Example 3 | Photosensitive member C | Toner 1 | 0.29 | 0.10 |
| Comparative Example 4 | Photosensitive member D | Toner 1 | 0.27 | 0.10 |
| Comparative Example 5 | Photosensitive member E | Toner 1 | 0.26 | 0.10 |
| Comparative Example 6 | Photosensitive member F | Toner 1 | 0.27 | 0.09 |
| Comparative Example 7 | Photosensitive member G | Toner 1 | 0.26 | 0.10 |
| Comparative Example 8 | Photosensitive member H | Toner 1 | 0.26 | 0.09 |
| Comparative Example 9 | Photosensitive member I | Toner 1 | 0.27 | 0.10 |
| Comparative Example 10 | Photosensitive member J | Toner 1 | 0.21 | 0.08 |
| Comparative Example 11 | Photosensitive member K | Toner 1 | 0.27 | 0.10 |
| Comparative Example 12 | Photosensitive member L | Toner 1 | 0.27 | 0.12 |
| Comparative Example 13 | Photosensitive member M | Toner 1 | 0.40 | 0.02 |

### <Examples 2 to 35>

In Examples 2 to 35, process cartridges were produced with photosensitive members 2 to 29 and toners 1 to 3 as shown in Table 3, and the same image output test as in Example 1 was carried out. The evaluation results are shown in Table 3.

### <Comparative Examples 1 to 13>

In Comparative Examples 1 to 13, process cartridges were produced with photosensitive members A to M and toner 1 as shown in Table 3, and the same image output test as in Example 1 was carried out. The evaluation results are shown in Table 3.

According to the present invention, an image-forming apparatus with strontium titanate used as an external additive for a toner can be provided, wherein the image-forming apparatus is an electrophotographic apparatus having the durability of an electrophotographic photosensitive member maintained and being superior in transferability even under low-temperature/low-humidity conditions.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electrophotographic apparatus comprising:
an electrophotographic photosensitive member comprising a surface layer comprising a resin X as a binder resin;
a charging unit that charges a surface of the electrophotographic photosensitive member with electricity;
an exposing unit that irradiates the charged surface of the electrophotographic photosensitive member with light to form an electrostatic latent image;
a developing unit that feeds a toner to the electrostatic latent image to form a toner image; and
a transferring unit that transfers the toner image onto a transfer medium, wherein
the toner comprises strontium titanate as an external additive, and
the resin X comprises a structural unit represented by Formula (1):

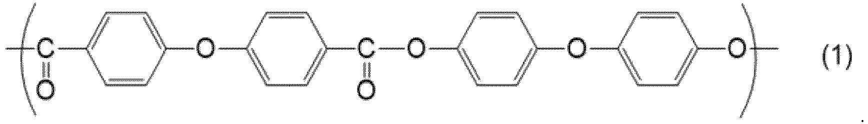

2. The electrophotographic apparatus according to claim 1, wherein the resin X further comprises a structural unit represented by Formula (2): 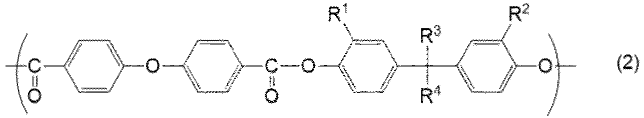 wherein R¹ and R² each represent a methyl group, and R³ and R⁴ are bonding to each other to represent a cycloalkylidene group having five or six carbon atoms; or R¹ and R² each independently represent a hydrogen atom or a methyl group, R³ represents a methyl group, and R⁴ represents a hydrogen atom or an alkyl group having two or three carbon atoms.

3. The electrophotographic apparatus according to claim 2, wherein a value of n2/n1 is 1.0 or more, wherein the value is a ratio of the number of the structural unit represented by Formula (2) contained in the resin X, n2, to the number of the structural unit represented by Formula (1) contained in the resin X, n1.

4. The electrophotographic apparatus according to claim 2 or 3, wherein a content of the resin X comprising the structural unit represented by Formula (1) and the structural unit represented by Formula (2) in the binder resin in the surface layer is 50% by mass or more and 100% by mass or less.

5. The electrophotographic apparatus according to any one of claims 2 to 4, wherein the structural unit represented by Formula (2) is a structural unit represented by Formula (2-1), (2-2), (2-3), (2-4) or (2-5):

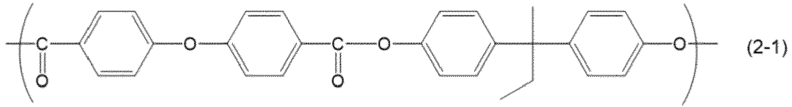

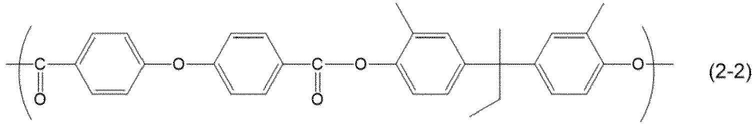

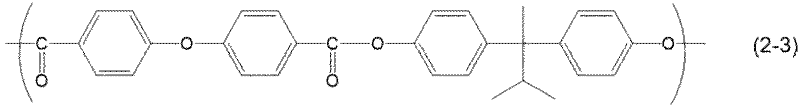

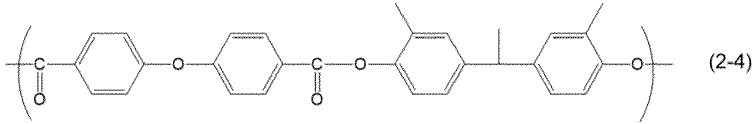

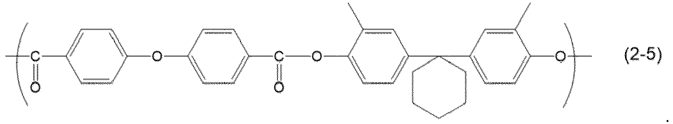

6. The electrophotographic apparatus according to any one of claims 2 to 5, wherein the structural unit represented by Formula (2) is a structural unit represented by Formula (2-5):

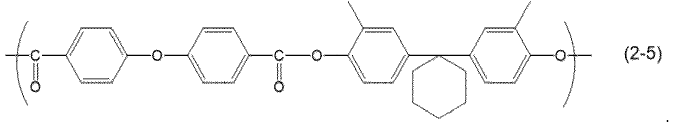

7. The electrophotographic apparatus according to any one of claims 1 to 6, wherein the resin X further comprises a structural unit represented by Formula (PE1-1) and a structural unit represented by Formula (PE2-1):

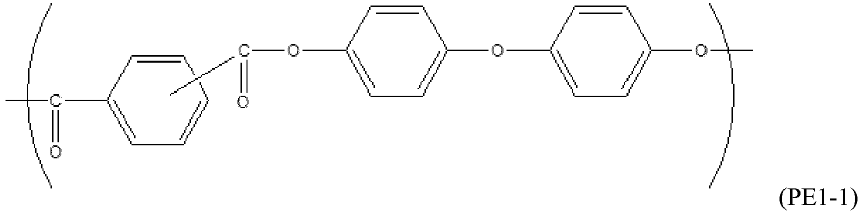

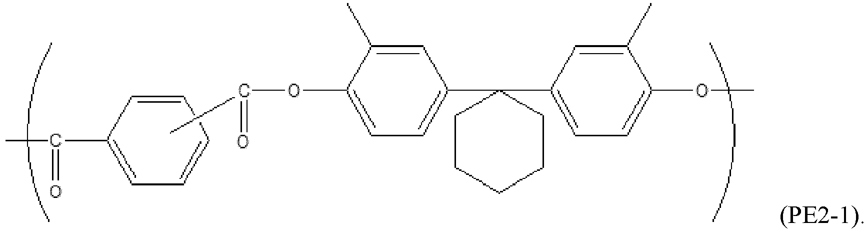

8. The electrophotographic apparatus according to any one of claims 1 to 7, wherein a percentage by mass of the strontium titanate based on a toner particle in the toner is 0.1 to 1.0% by mass.
